# EUROPEAN PATENT APPLICATION

(11) **EP 4 697 630 A1**
(43) Date of publication of application: **18.02.2026**
(21) Application number: 24806363.8
(22) Date of filing: 29.04.2024
(51) Int. Cl.: H04L 1/06, H04B 7/0456

(54) **CAPABILITY REPORTING METHOD AND APPARATUS**

(30) Priority: 12.05.2023 CN 202310542039
(71) Applicant: Huawei Technologies Co., Ltd., Shenzhen, Guangdong 518129 (CN)
(72) Inventor: GAO, Junhui, Shenzhen, Guangdong 518129 (CN); YE, Chencheng, Shenzhen, Guangdong 518129 (CN); WANG, Xiaohan, Shenzhen, Guangdong 518129 (CN); JIN, Huangping, Shenzhen, Guangdong 518129 (CN)
(74) Representative: Goddar, Heinz J.
(86) International application number: PCT/CN2024/090688
(87) International publication number: WO 2024/235007

(57) **Abstract**

This application provides a capability reporting method and an apparatus, to improve effectiveness of CSI report reporting, and may be applied to a communication system. The method includes: A terminal device generates first information. The first information includes at least one piece of capability information of the terminal device, and the capability information indicates a quantity of time domain units supported by the terminal device for a precoding matrix indicator PMI. The terminal device sends the first information to a network device.

## Description

This application claims priority to Chinese Patent Application No. 202310542039.5, filed with the China National Intellectual Property Administration on May 12, 2023 and entitled "CAPABILITY REPORTING METHOD AND APPARATUS", which is incorporated herein by reference in its entirety.

### TECHNICAL FIELD

This application relates to the communication field, and in particular, to a capability reporting method and an apparatus.

### BACKGROUND

In a communication system, application of a large-scale multiple-input multiple-output (multiple-input multiple-output, MIMO) technology can improve spectral efficiency of the communication system. With the use of the MIMO technology, when a network device (for example, a base station) sends data to a terminal device, the network device needs to perform modulation and coding and signal precoding, where the modulation and coding and the signal precoding depends on channel state information (channel state information reference, CSI) fed back by the terminal device to the network device. A CSI measurement procedure may be performed between the terminal device and the network device to feed back the CSI, which is carried in a CSI report.

Currently, in a CSI measurement process for the Type II (Type II) codebook, impact of a capability of a terminal device on complexity only considers spatial- and frequency- domain configurations, while time domain configuration are ignored. As a result, actual processing complexity during terminal device's CSI report reporting does not match the capability of the terminal device, which consequently may lead to CSI reporting failure.

### SUMMARY

Embodiments of this application provide a capability reporting method and an apparatus, to improve effectiveness of CSI reporting.

To achieve the foregoing objective, the following technical solutions are used in this application.

According to a first aspect, a capability reporting method is provided. The capability reporting method includes: A network device receives first information. The first information includes at least one piece of capability information of the terminal device, and the capability information indicates a quantity of time domain units supported by the terminal device for a precoding matrix indicator PMI. The network device sends third information. The third information indicates a quantity of time domain units corresponding to at least one to-be-reported channel state information CSI report, and the quantity of time domain units corresponding to one of the at least one CSI report is a quantity of time domain units for one type of PMI in a quantity of time domain units for at least one type of PMI.

Based on the method provided in the first aspect, the network device may learn of, based on a capability of the terminal device, for example, the at least one piece of capability information indicated by the first information, the quantity of time domain units actually supported by the terminal device, and configure, for the terminal device based on the quantity of time domain units actually supported by the terminal device, a parameter for reporting the CSI report, for example, the quantity of time domain units corresponding to the CSI report, or the foregoing third information, so that a capability requirement of the terminal device for determining the CSI report falls within the quantity of time domain units supported by the terminal device, thereby improving effectiveness of CSI report reporting.

In a possible design solution, the capability information may further indicate one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources. In this way, the network device may obtain the actual capability information of the terminal device, and configure, for the terminal device based on the actual capability information of the terminal device, the parameter for reporting the CSI report, for example, the quantity of time corresponding to the CSI report, so that a capability requirement of the terminal device for determining the CSI report can fall within a capability range of the terminal device.

Optionally, the capability information may include the quantity of time domain units supported by the terminal device for the PMI and one or more of the following: a quantity of ports supported by the terminal device in one CSI-RS resource, a quantity of the CSI-RS resources supported by the terminal device on all carriers, or a combination of a total quantity of ports supported by the terminal device in all CSI-RS resources on all the carriers. In this way, when a plurality of CSI reports are reported, a capability requirement of the terminal device for reporting the plurality of CSI reports may match an actual capability of the terminal device, to further improve effectiveness of CSI report reporting.

Alternatively, optionally, the capability information may include the quantity of time domain units supported by the terminal device for the PMI and one or more of the following: a quantity of ports supported by the terminal device in one CSI-RS resource corresponding to a CSI report, a quantity of CSI-RS resources that correspond to the CSI report and that is supported by the terminal device, or a combination of a total quantity of ports supported by the terminal device in all CSI-RS resources corresponding to the CSI report.

Alternatively, optionally, the capability information may include a correspondence between the quantity of time domain units supported by the terminal device for the PMI and a first combination supported by the terminal device. The first combination may include one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers. In this way, when a plurality of CSI reports are reported, a capability requirement of the terminal device for reporting the plurality of CSI reports may match an actual capability of the terminal device, to further improve effectiveness of CSI report reporting.

Alternatively, optionally, the capability information may include a correspondence between the quantity of time domain units supported by the terminal device for the PMI and a second combination supported by the terminal device, where the second combination may include one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

Alternatively, optionally, the capability information may include a correspondence between second information and a third combination. The second information may indicate the quantity of time domain units supported by the terminal device for the PMI and frequency domain information. The frequency domain information indicates a quantity of subbands that carry a PMI in a subband that carries channel quality information CQI. The third combination may include one or more of the following: a quantity of ports supported by the terminal device in one CSI-RS resource, a quantity of the CSI-RS resources supported by the terminal device on all carriers, or a total quantity of ports supported by the terminal device in all CSI-RS resources on all the carriers.

Alternatively, optionally, the capability information may include a correspondence between second information and a fourth combination. The second information may indicate the quantity of time domain units supported by the terminal device for the PMI and frequency domain information. The frequency domain information indicates a quantity of subbands that carry a precoding matrix indicator PMI in a subband that carries channel quality information CQI. The fourth combination may include one or more of the following: a quantity of ports supported by the terminal device in one CSI-RS resource corresponding to a CSI report, the quantity of CSI-RS resources that corresponding to one CSI report and that is supported by the terminal device, or the total quantity of ports supported by the terminal device in all CSI-RS resources corresponding to the CSI report.

Alternatively, optionally, the capability information may include the quantity of time domain units supported by the terminal device for the PMI, a total quantity of ports supported by the terminal device in all CSI-RS resources on all carriers, and one or a combination of the following: a quantity of ports supported by the terminal device in one CSI-RS resource corresponding to a CSI report, or a quantity of CSI-RS resources that correspond to the CSI report and that is supported by the terminal device.

Alternatively, optionally, the capability information may include the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

In a possible design solution, the method provided in the first aspect may further include: The network device receives a CSI report from the terminal device. The CSI report is obtained based on the third information.

According to a second aspect, a capability reporting method is provided. The capability reporting method includes: A terminal device generates first information. The first information includes at least one piece of capability information of the terminal device, and the capability information indicates a quantity of time domain units supported by the terminal device for a precoding matrix indicator PMI. The terminal device sends the first information to a network device.

In a possible design solution, the capability information may further indicate one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources.

Optionally, the capability information may include the quantity of time domain units supported by the terminal device for the PMI and one or more of the following: a quantity of ports supported by the terminal device in one CSI-RS resource, a quantity of CSI-RS resources supported by the terminal device on all carriers, or a combination of a total quantity of ports supported by the terminal device in all CSI-RS resources on all the carriers.

Alternatively, optionally, the capability information may include the quantity of time domain units supported by the terminal device for the PMI and one or more of the following: a quantity of ports supported by the terminal device in one CSI-RS resource corresponding to a CSI report, a quantity of CSI-RS resources that correspond to the CSI report and that is supported by the terminal device, or a combination of a total quantity of ports supported by the terminal device in all CSI-RS resources corresponding to the CSI report.

Alternatively, optionally, the capability information may include a correspondence between the quantity of time domain units supported by the terminal device for the PMI and a first combination supported by the terminal device. The first combination may include one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

Alternatively, optionally, the capability information may include a correspondence between the quantity of time domain units supported by the terminal device for the PMI and a second combination supported by the terminal device. The second combination may include one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

Alternatively, optionally, the capability information may include a correspondence between second information and a third combination. The second information may indicate the quantity of time domain units supported by the terminal device for the PMI and frequency domain information. The frequency domain information indicates a quantity of subbands that carry a PMI in a subband that carries channel quality information CQI. The third combination may include one or more of the following: a quantity of ports supported by the terminal device in one CSI-RS resource, a quantity of the CSI-RS resources supported by the terminal device on all carriers, or a total quantity of ports supported by the terminal device in all CSI-RS resources on all the carriers.

Alternatively, optionally, the capability information may include a correspondence between second information and a fourth combination. The second information may indicate the quantity of time domain units supported by the terminal device for the PMI and frequency domain information. The frequency domain information indicates a quantity of subbands that carry a precoding matrix indicator PMI in a subband that carries channel quality information CQI. The fourth combination may include one or more of the following: a quantity of ports supported by the terminal device in one CSI-RS resource corresponding to a CSI report, the quantity of CSI-RS resources that corresponding to one CSI report and that is supported by the terminal device, or the total quantity of ports supported by the terminal device in all CSI-RS resources corresponding to the CSI report.

Alternatively, optionally, the capability information may include the quantity of time domain units supported by the terminal device for the PMI and one or a combination of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources on all carriers.

Alternatively, optionally, the capability information may include the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

In a possible design solution, the method provided in the second aspect may further include: The terminal device receives third information from the network device. The third information indicates a quantity of time domain units corresponding to one of at least one to-be-reported CSI report, and the quantity of time domain units corresponding to one of the at least one CSI report is a quantity of time domain units for one type of PMI in a quantity of time domain units for at least one type of PMI. The terminal device sends a CSI report based on the third information.

For technical effects of the method according to the second aspect, refer to the technical effects of the method according to the first aspect. Details are not described herein again.

According to a third aspect, a channel measurement method is provided. The channel measurement method includes: A terminal device receives fourth information from a network device. The fourth information is used to trigger the terminal device to report a channel state information CSI report, and indicates a start moment of reporting the CSI report. A time length between an end moment of receiving the fourth information and a start moment of reporting the CSI report is a first time length. A time length between an end moment of receiving a CSI-RS resource used to calculate the CSI report and the start moment of reporting the CSI report is a second time length. At least one of the first time length and the second time length is related to a quantity of time domain units corresponding to the CSI report and/or a quantity of CSI-RS measurements. The second time length is less than the first time length. The terminal device receives a CSI-RS from the network device. The CSI-RS is located before a target reference resource, and the target reference resource is determined based on the start moment of reporting the CSI report and the second time length. The terminal device sends the CSI report to the network device.

Based on the method provided in the third aspect, the terminal device may receive the fourth information from the network device, and send, to the network device, the CSI report obtained based on the fourth information. The fourth information is used to trigger the terminal device to report the channel state information CSI report, and indicates the start moment of the CSI report. The first time length between the end moment of the fourth information and the start moment of the CSI report is related to the quantity of time domain units corresponding to the CSI report and/or the quantity of CSI-RS measurements; and/or the second time length between the end moment of the CSI-RS resource actually used to calculate the CSI report to the start moment of an uplink data channel used to carry the CSI report is related to the quantity of time domain units corresponding to the CSI report and/or the quantity of CSI-RS measurements. In this way, the CSI report is sent based on the fourth information indicated by the network device, where the first time length and/or the second time length of the terminal device are/is indicated by the network device based on the quantity of time domain units corresponding to the CSI report, so that the terminal device has sufficient time to calculate the CSI report, and a CSI calculation delay matches a capability of the terminal device, thereby improving effectiveness of CSI report reporting.

In a possible design solution, the second time length is positively correlated with the quantity of time domain units. In this way, in different time domain unit configurations, CSI calculation complexity of the terminal device varies, and when different second time lengths are configured, sufficient calculation time may be reserved for the terminal device based on different calculation complexity.

In a possible design solution, values of the quantity of time domain units are grouped into N sets, and values of a quantity of all time domain units in an n^{th} set in the N sets are all greater than or equal to values of a quantity of time domain units in an (n-1)^{th} set. Different quantities of time domain units correspond to a same second time length. In this way, values of a quantity of the plurality of time domain units may correspond to a same time length, so that scheduling complexity of the network device can be reduced.

In a possible design solution, the first time length and the second time length satisfy the following relationship: *Z*2 = *Z*2' + *K*1*. Z*2 is the first time length, *Z*2' is the second time length, and *K*1 is a constant, or *K*1 is related to the quantity of CSI-RS measurements.

Optionally, when *K*1 is related to the quantity of CSI-RS measurements, *K*1 is positively related to the quantity of CSI-RS measurements. It is ensured within the first time length that an appropriate quantity of CSI measurements can be measured within time.

Further, *K*1 meets the following relationship: *K*1 = *a*(*Ks -* 1) + *b. a* is a constant, or a is a parameter related to an interval between two adjacent CSI-RS measurements, b is a constant, *a* > 0, *b* ≥ 0, and *Ks* is the quantity of CSI-RS measurements.

Optionally, in this embodiment of this application, the quantity of CSI-RS measurements may be a smallest one of the plurality of quantities of CSI-RS measurements preconfigured by the network device for the terminal device; or the quantity of CSI-RS measurements may be a smallest one of a plurality of quantities of CSI-RS measurements agreed on in a protocol.

In a possible design solution, when *f*(*L, N*4) is less than or equal to a first threshold, the second time length satisfies the following relationship: *Z*2' = *K3* * *α_{µ}*. When *f*(*L, N*4) is greater than a first threshold, the second time length satisfies the following relationship: *Z*2' = *K4* * *α_{µ}*. *L is* a quantity of spatial-domain bases, N4 is the quantity of time domain units, *f*(*L, N*4) is a function related to *L* and *N*4, and *α_{µ}*. is a constant greater than 0. *K*3 and *K*4 are both constants. Alternatively, *K3* is related to the quantity of CSI-RS measurements, and *K4* is related to the quantity of CSI-RS measurements. When K3 is related to the quantity of CSI-RS measurements, and K4 is related to the quantity of CSI-RS measurements, the second time length may match the quantity of CSI-RS measurements. In this way, sufficient time may be reserved for CSI calculation.

Optionally, *f*(*L, N*4) is *M* times a product of the quantity of spatial-domain bases and the quantity of time domain units. *M* is an integer greater than or equal to 1.

Optionally, the second time length may be further related to the interval between the two adjacent CSI-RS measurements.

Further, the second time length is inversely proportional to the interval between the two adjacent CSI-RS measurements. In this way, the second time length can be reduced when CSI-RS measurement can be completed through measurement in the interval between the two adjacent CSI-RS measurements, thereby shortening a delay in CSI report reporting.

According to a fourth aspect, a channel measurement method is provided. The channel measurement method includes: A network device sends fourth information to a terminal device. The fourth information is used to trigger the terminal device to report a channel state information CSI report, and indicates a start moment of reporting the CSI report. A time length between an end moment of receiving the fourth information and a start moment of reporting the CSI report is a first time length. A time length between an end moment of receiving a CSI-RS resource used to calculate the CSI report and the start moment of reporting the CSI report is a second time length. At least one of the first time length and the second time length is related to a quantity of time domain units corresponding to the CSI report and/or a quantity of CSI-RS measurements. The second time length is less than the first time length. The network device sends a CSI-RS to the terminal device. The CSI-RS is located before a target reference resource, and the target reference resource is determined based on the start moment of reporting the CSI report and the second time length. The network device receives the CSI report from the terminal device.

In a possible design solution, values of the quantity of time domain units are grouped into N sets, and values of a quantity of all time domain units in an n^{th} set in the N sets are all greater than or equal to values of a quantity of time domain units in an (n-1)^{th} set. Different quantities of time domain units correspond to a same second time length. Alternatively, the second time length is positively correlated with the quantity of time domain units.

In a possible design solution, the first time length and the second time length satisfy the following relationship: *Z*2 = *Z*2' + *K1.* Z2 is the first time length, *Z*2' is the second time length, and *K*1 is a constant, or *K*1 is related to the quantity of CSI-RS measurements.

Optionally, in this embodiment of this application, the quantity of CSI-RS measurements may be a smallest one of the plurality of quantities of CSI-RS measurements preconfigured by the network device for the terminal device; or the quantity of CSI-RS measurements may be a smallest one of a plurality of quantities of CSI-RS measurements agreed on in a protocol.

Optionally, when *K*1 is related to the quantity of CSI-RS measurements, *K*1 is positively related to the quantity of CSI-RS measurements.

Further, *K*1 meets the following relationship: *K*1 = *a*(*Ks* - 1) + *b. a* is a constant, or a is a parameter related to an interval between two adjacent CSI-RS measurements, *b* is a constant, *a* > 0, *b* ≥ 0, and *Ks* is the quantity of CSI-RS measurements.

In a possible design solution, when *f*(*L, N*4) is less than or equal to a first threshold, the second time length satisfies the following relationship: *Z*2' = *K*3 * *α_{µ}*. When *f*(*L, N*4) is greater than a first threshold, the second time length satisfies the following relationship: *Z*2' = *K4* * *α_{µ}. L is* a quantity of spatial-domain bases, *N*4 is the quantity of time domain units, *f*(*L, N*4) is a function related to *L* and *N*4, and *α_{µ}* is a constant greater than 0. *K*3 and *K*4 are both constants. Alternatively, *K*3 is related to the quantity of CSI-RS measurements, and *K*4 is related to the quantity of CSI-RS measurements.

Optionally, *f*(*L, N*4) is *M* times a product of the quantity of spatial-domain bases and the quantity of time domain units. *M* is an integer greater than or equal to 1.

Optionally, *K*3 is positively related to the quantity of CSI-RS measurements, and *K4* is positively related to the quantity of CSI-RS measurements.

Optionally, the second time length may be further related to the interval between the two adjacent CSI-RS measurements.

Further, the second time length is inversely proportional to the interval between the two adjacent CSI-RS measurements.

For technical effects of the method according to the fourth aspect, refer to the technical effects of the method according to the third aspect. Details are not described herein again.

According to a fifth aspect, a channel measurement method is provided. The channel measurement method includes: A terminal device receives fifth information from a network device. The fifth information is used to trigger the terminal device to report a target channel state information CSI report, and indicates a quantity of CSI processing unit CPUs occupied for obtaining the target CSI report. The quantity of CPUs is related to a quantity of channel state information reference signal CSI-RS measurements and/or a quantity of time domain units for a precoding matrix indicator PMI in the target CSI report. The terminal device reports a CSI report based on the quantity of CPUs.

Based on the method provided in the fifth aspect, the terminal device may receive the fifth information from the network device, and report the CSI report based on the quantity, indicated by the fifth information, of CSI processing unit CPUs occupied by the target CSI report and a quantity of idle CPUs of the terminal device. In this way, the terminal device can report the CSI report based on a CPU status of the terminal device, so that idle CPUs of the terminal device can match different statuses of reporting the CSI report.

In a possible design solution, the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

In a possible design solution, that the terminal device reports the CSI report based on the quantity of CPUs includes: When a quantity of idle CPUs is greater than or equal to the quantity of CPUs occupied by the target CSI report, the terminal device sends the target CSI report to the network device. In this way, the CSI report can be updated in time. When a quantity of idle CPUs is less than the quantity of CPUs occupied by the target CSI report, the terminal device does not send the CSI report. In this way, resource overheads and power consumption of the terminal device can be reduced. Alternatively, the terminal device sends, to the network device, a CSI report that has been reported before current time. In this way, additional rate matching can be avoided, and processing complexity of the terminal device and the network device is not increased.

According to a sixth aspect, a channel measurement method is provided. The channel measurement method includes: A network device sends fifth information to a terminal device. The fifth information is used to trigger the terminal device to report a target channel state information CSI report, and indicates a quantity of CSI processing unit CPUs occupied for obtaining the target CSI report. The quantity of CPUs is related to a quantity of channel state information reference signal CSI-RS measurements and/or a quantity of time domain units for a precoding matrix indicator PMI in the target CSI report. The network device receives the CSI report from the terminal device. The CSI report is determined by the terminal device based on the quantity of CPUs.

In a possible design solution, the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

For technical effects of the method according to the sixth aspect, refer to the technical effects of the method according to the fifth aspect. Details are not described herein again.

According to a seventh aspect, a communication apparatus is provided. The communication apparatus is configured to perform the communication method according to any one of the implementations of the first aspect to the sixth aspect.

In this application, the communication apparatus according to the seventh aspect may be the terminal device according to any one of the second aspect, the third aspect, or the fifth aspect, the network device according to any one of the first aspect, the fourth aspect, or the sixth aspect, a chip (system) or another part or component that may be disposed in the terminal device or the network device, or an apparatus including the terminal device or the network device.

It should be understood that the communication apparatus according to the seventh aspect includes a corresponding module, unit, or means (means) for implementing the method according to any one of the first aspect to the sixth aspect. The module, unit, or means may be implemented by using hardware, software, or hardware executing corresponding software. The hardware or software includes one or more modules or units configured to perform functions in the foregoing methods.

According to an eighth aspect, a communication apparatus is provided. The communication apparatus includes a processor, and the processor is configured to perform the method according to any one of the possible implementations of the first aspect to the sixth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible design solution, the communication apparatus according to the eighth aspect may further include a memory. The memory and the processor may be integrated together, or may be disposed separately. The memory may be configured to store a computer program and/or data related to the method according to any one of the first aspect to the sixth aspect.

In this application, the communication apparatus according to the eighth aspect may be the terminal device according to any one of the second aspect, the third aspect, or the fifth aspect, the network device according to any one of the first aspect, the fourth aspect, or the sixth aspect, a chip (system) or another part or component that may be disposed in the terminal device or the network device, or an apparatus including the terminal device or the network device.

According to a ninth aspect, a communication apparatus is provided. The communication apparatus includes a processor. The processor is coupled to a memory, and the processor is configured to execute a computer program stored in the memory, to cause the communication apparatus to perform the method according to any one of the possible implementations of the first aspect to the sixth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be the terminal device according to any one of the second aspect, the third aspect, or the fifth aspect, the network device according to any one of the first aspect, the fourth aspect, or the sixth aspect, a chip (system) or another part or component that may be disposed in the terminal device or the network device, or an apparatus including the terminal device or the network device.

According to a tenth aspect, a communication apparatus is provided, including a processor and a memory. The memory is configured to store a computer program, and when the processor executes the computer program, the communication apparatus is caused to perform the method according to any one of the implementations of the first aspect to the sixth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be the terminal device according to any one of the second aspect, the third aspect, or the fifth aspect, the network device according to any one of the first aspect, the fourth aspect, or the sixth aspect, a chip (system) or another part or component that may be disposed in the terminal device or the network device, or an apparatus including the terminal device or the network device.

According to an eleventh aspect, a communication apparatus is provided, including a processor. The processor is configured to: be coupled to a memory, after reading a computer program in the memory, perform the method according to any one of the implementations of the first aspect to the sixth aspect based on the computer program.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the eleventh aspect may be the terminal device according to any one of the second aspect, the third aspect, or the fifth aspect, the network device according to any one of the first aspect, the fourth aspect, or the sixth aspect, a chip (system) or another part or component that may be disposed in the terminal device or the network device, or an apparatus including the terminal device or the network device.

According to a twelfth aspect, a processor is provided. The processor is configured to perform the method according to any one of the possible implementations of the first aspect to the sixth aspect.

According to a thirteenth aspect, a communication system is provided. The communication system includes one or more terminal devices and one or more network devices.

According to a fourteenth aspect, a computer-readable storage medium is provided, including a computer program or instructions. When the computer program or the instructions are run on a computer, the computer is caused to perform the method according to any one of the possible implementations of the first aspect to the sixth aspect.

According to a fifteenth aspect, a computer program product is provided, including a computer program or instructions. When the computer program or the instructions are run on a computer, the computer is caused to perform the method according to any one of the possible implementations of the first aspect to the sixth aspect.

In addition, for technical effects of the communication apparatuses according to the seventh aspect to the fifteenth aspect, refer to the technical effects of the methods according to the first aspect to the sixth aspect. Details are not described herein again.

### BRIEF DESCRIPTION OF DRAWINGS

FIG. 1 is a schematic flowchart of performing CSI measurement according to an embodiment of this application;
FIG. 2 is a diagram of a relationship between a CSI report and a CSI resource according to an embodiment of this application;
FIG. 3 is a diagram of a CSI calculation delay according to an embodiment of this application;
FIG. 4 is a diagram of an architecture of a communication system according to an embodiment of this application;
FIG. 5 is a diagram of an architecture of a network device according to an embodiment of this application;
FIG. 6 is a diagram of information exchange between a network device and a terminal device according to an embodiment of this application;
FIG. 7 is a schematic flowchart of a capability reporting method according to an embodiment of this application;
FIG. 8 is a schematic flowchart 1 of a channel measurement method according to an embodiment of this application;
FIG. 9 is a schematic flowchart 2 of a channel measurement method according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

### DESCRIPTION OF EMBODIMENTS

For ease of understanding of embodiments of this application, the following first describes technologies and technical terms related to embodiments of this application.

A time domain symbol (symbol) may also be briefly referred to as a symbol. In embodiments of this application, the time domain symbol may be an orthogonal frequency division multiplexing (orthogonal frequency division multiplexing, OFDM) symbol, a discrete Fourier transform-spread-spectrum OFDM (discrete Fourier transform-spread-OFDM, DFT-s-OFDM) symbol, or the like.

Time domain unit: One time domain unit may include one or more slots (slots), or include one or more time domain symbols, for example, OFDM symbols. A duration of a slot varies with different subcarrier spacings (subcarrier spacing, SCS). A larger subcarrier spacing indicates a shorter duration of a slot; and a smaller subcarrier spacing indicates a longer duration of a slot. For ease of understanding, in the following embodiments, an example in which one time domain unit includes one slot is used for description. Details are not described below again. It may be understood that the time domain unit may alternatively be divided based on another time granularity. Details are not described herein.

In a communication system, application of a large-scale multiple-input multiple-output technology can improve spectral efficiency of the communication system. With the use of the MIMO technology, when a network device, for example, a base station sends data to a terminal device, the base station needs to perform modulation and coding and signal precoding, where the modulation and coding and the signal precoding depends on channel state information (channel state information reference, CSI) fed back by the terminal device to the network device. A CSI measurement procedure may be performed between the terminal device and the network device to feed back the CSI, which is carried in a CSI report.

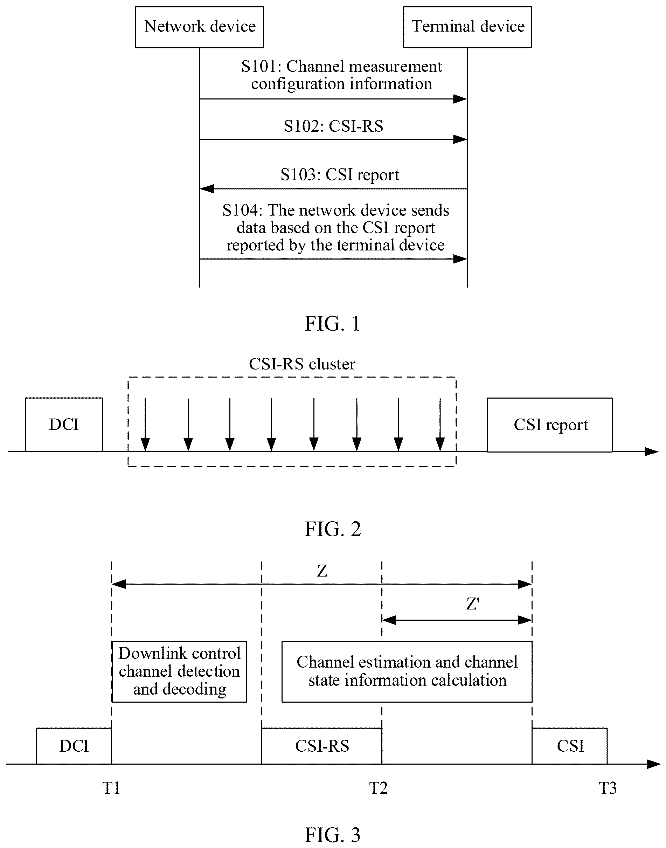

FIG. 1 is a flowchart of performing CSI measurement between a network device and a terminal device according to an embodiment of this application. As shown in FIG. 1, a CSI measurement procedure includes the following steps S101 to S104.

S101: The network device sends channel measurement configuration information to the terminal device.

The channel measurement configuration information indicates that channel measurement is performed and a configuration parameter used to perform channel measurement, for example, a time domain resource and a frequency domain resource. The channel measurement configuration information may include, for example, channel measurement resource (resources for channel measurement, CMR), or further include an interference measurement resource (resources for interference, IMR) corresponding to the CMR.

S102: The network device sends a channel state information reference signal (channel state information reference signal, CSI-RS) to the terminal device. Correspondingly, the terminal device receives the CSI-RS from the network device.

In new radio (new radio, NR), the network device sends a CSI-RS for the terminal device to detect a downlink channel, and the terminal device receives the CSI-RS on a preconfigured CMR to perform channel estimation. In addition, the terminal device may alternatively receive an interference measurement signal on a preconfigured IMR, to perform interference measurement. The terminal device performs calculation based on measurement results on the CMR and the IMR, to obtain a final CSI reporting amount. A process including the following steps may be referred to as a CSI calculation process, namely, a process in which the terminal device measures the CSI-RS on the CMR and obtains the CSI reporting amount. The CSI reporting amount may include a channel rank indicator (rank indicator, RI), used to determine a quantity of streams for transmitting data by the network device to the terminal device; may further include a channel state indicator (channel quality indicator, CQI) (determined based on both a measurement result of the CSI-RS and an interference measurement result), used to determine a modulation order and a channel coding rate for transmitting data by the network device to the terminal device; and may further include a PMI, used to determine precoding for transmitting data by the network device to the terminal device. A CSI report includes the CSI reporting amount. Therefore, the CSI report includes information in the CSI reporting amount.

The CSI calculation process includes a PMI calculation process.

A CSI-RS resource may be a non-zero power channel state information (non-zero power channel state information reference signal, NZP CSI-RS) resource.

S103: The terminal device reports the CSI report to the network device based on the measurement result of the CSI-RS. The CSI report includes the CSI reporting amount.

It may be understood that the CSI report is determined by the terminal device based on the measurement results on the CMR and the IMR.

In a CSI measurement and feedback procedure, the method provided in FIG. 1 may further include S104.

S104: The network device sends data based on the CSI report reported by the terminal device.

In the procedure shown in FIG. 1, the CMR used to send the CSI-RS (briefly referred to as a CSI-RS resource) and the IMR used to send the interference measurement signal may be periodic, semi-persistent, or aperiodic. The periodic/semi-persistent/aperiodic CSI-RS resource and CSI interference measurement resource are both configured for the terminal device by using higher layer signaling. The network device configures the periodic CSI-RS resource for the terminal device by using RRC signaling, where the periodic CSI-RS resource includes a periodicity of the CSI-RS resource.

In addition, the CSI reporting may also be periodic, semi-persistent, or aperiodic. Descriptions are provided below separately.

(1) Periodic CSI reporting (periodic CSI reporting, P-CSI): The network device configures the periodic CSI reporting for the terminal device by using higher layer signaling (RRC signaling), and the terminal device performs channel measurement based on a periodic NZP CSI-RS resource, and sends a CSI report at a fixed time interval (that is, a CSI report periodicity configured by the network device).

(2) Semi-persistent CSI reporting may also be referred to as semi-periodic CSI reporting or semi-static CSI reporting. In the semi-persistent CSI reporting, when the terminal device is configured to perform semi-persistent CSI reporting, the terminal device starts the CSI reporting only after receiving downlink activation signaling sent by the network device, and ends the CSI reporting after receiving downlink deactivation signaling. The terminal device performs periodic CSI measurement and reporting between moments of delivering the two pieces of downlink signaling. An NZP CSI-RS resource used for the semi-persistent CSI reporting may be periodic or semi-persistent. The semi-persistent CSI reporting may be performed on a PUCCH resource, and the network device activates and deactivates the semi-persistent CSI reporting by using downlink higher layer signaling (MAC CE signaling); or the semi-persistent CSI reporting may be performed on a physical uplink shared channel (physical uplink shared channel, PUSCH) resource, and the network device activates and deactivates the semi-persistent CSI reporting by using physical layer downlink control information (downlink control information, DCI).

(3) Aperiodic CSI reporting (aperiodic CSI reporting, AP-CSI): An aperiodic CSI reporting and measurement process is as follows: The network device first semi-statically configures configuration parameters of a plurality of CSI reports for the terminal device by using downlink RRC signaling, and triggers one or more of the CSI reports by using DCI, and the terminal device performs CSI measurement based on the configuration parameters of the CSI reports, and sends the CSI reports through a PUSCH. It should be noted that, similar to the semi-persistent CSI measurement and CSI reporting, although the aperiodic CSI measurement and CSI reporting need to be triggered by the network device, the aperiodic CSI measurement and CSI reporting do not need to be deactivated after being triggered by using the DCI. An NZP CSI-RS resource used for the aperiodic CSI reporting may be periodic, semi-persistent, or aperiodic.

In an actual communication system, there is a delay in CSI report feedback, that is, there is a delay between a reported CSI report and actually measured CSI. In this case, there is a problem of CSI expiration. This problem causes a definite performance loss of the terminal device in a medium- and high-speed movement scenario. The CSI expiration is essentially caused by a time-varying characteristic of a channel, and corresponds to a Doppler change.

In a conventional CSI report based on a Type II codebook, a PMI usually includes two dimensions: a space domain (corresponding to an angle domain) and a frequency domain (corresponding to a delay domain). Channel estimation and channel matrix decomposition such as singular value decomposition (singular value decomposition, SVD) or eigenvalue decomposition (eigenvalue decomposition, EVD) in PMI calculation are keys to directly determine computing complexity.

Specifically, a quantity of CSI-RS ports mainly affects the complexity of the channel estimation, and may be understood as a quantity of transmit antenna ports of the network device that can be distinguished by the terminal device. For a downlink channel matrix $H ∈ {ℂ}^{M \times N}$, 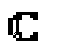 represents a complex number, *M* is a quantity of receive antenna ports of the terminal device, *N* is a quantity (for example, 32) of transmit antenna ports of the network device, and ${ℂ}^{M \times N}$ represents a matrix whose dimension is *M* × *N*. Because the quantity *M* of receive antenna ports of the terminal device is relatively determined, and a PMI is obtained by decomposing channel matrices corresponding to 2L antenna ports in the *M* antenna ports, *N* determines the computing complexity of the channel estimation. 2L is a quantity of spatial-domain bases. A larger value of 2L indicates higher precision of the PMI and higher computing complexity of each corresponding channel matrix decomposition. A quantity 2L of spatial beams is less than or equal to M.

It should be noted that, in NR, the network device may simultaneously configure a plurality of CSI reports, each CSI report may correspond to one CSI-RS resource set (set), the CSI-RS resource set may include at least one CSI-RS resource, and the terminal device may perform measurement in the at least one CSI-RS resource and report the CSI report. Therefore, a quantity of reported CSI reports triggered by the network device, a quantity of CSI-RS resources included in the CSI-RS resource set corresponding to the CSI report, and a quantity of ports in the CSI-RS resources all affect complexity of CSI estimation performed by the terminal device

It may be understood that, in embodiments of this application, unless otherwise specified, the port is the transmit antenna port of the network device.

In a Type II Doppler (mobility enhancement) codebook currently discussed in 3GPP R18, a new Doppler domain is introduced, and a PMI indicates a precoding matrix in three dimensions: space domain, frequency domain, and time domain (corresponding to a Doppler domain). To implement CSI feedback based on the Type II Doppler codebook in R18, a plurality of CSI-RS-based channel measurements need to be performed to obtain Doppler information. In other words, CSI-RS resources corresponding to a plurality of CSI-RSs are used as channel measurement resources for CSI measurement in the Type II Doppler codebook. The plurality of CSI-RSs form a cluster (burst), namely, a CSI-RS cluster. The following uses an example to describe a relationship between the CSI-RS resource and CSI reporting. FIG. 2 shows an example of a CSI report based on Doppler information. Each CSI-RS cluster includes eight CSI-RSs. The terminal device performs measurement based on the CSI-RSs in the CSI-RS cluster, to obtain the Doppler information and predict a channel or a PMI at a subsequent moment, to obtain a CSI report.

In a procedure of predicting the channel or the PMI, for example, when a time length of the channel or the PMI that needs to be predicted is N4 time domain units, that is, there are N4 time domain (Doppler domain) units, space-frequency two-dimensional PMI calculation needs to be performed on each time domain unit, and compression feedback of the PMI is performed with reference to the third dimension time domain (the Doppler domain).

It can be learned that, for the Type II codebook in which the Doppler domain is introduced, calculation complexity of the PMI is further related to a quantity of time domain units for feeding back the PMI. A larger quantity of time domain units indicates higher computing complexity of PMI estimation. Consequently, calculation complexity of the terminal device increases.

In some possible design solutions, the terminal device may report capability information of the terminal device to the network device, and the network device may configure, for the terminal device based on the capability information reported by the terminal device, a related parameter used to report a CSI report, for example, in the reported CSI report, a quantity of time domain units for a PMI, a quantity of CSI-RS resources corresponding to the CSI report, and a quantity of ports in a CSI-RS resource.

The introduction of the Doppler domain increases processing complexity of the terminal device. However, in the foregoing solution in which the network device configures, for the terminal device, the related parameter used to report the CSI report, the quantity of time domain units is not considered. Consequently, the processing complexity needed by the terminal device exceeds a processing capability of the terminal device.

In addition, for a semi-persistent CSI report or an aperiodic CSI report, after receiving corresponding DCI, the terminal device starts channel estimation and channel state information calculation, and reports channel state information. To ensure that the terminal device has sufficient time to determine the CSI report and feed back the CSI report, two delay parameters Z and Z' are defined in NR Rel-15. A value of Z is preset and is related to a CSI report type and a subcarrier spacing, and Z represents a minimum quantity of symbols between a last symbol (symbol) of a physical downlink control channel (physical downlink control channel, PDCCH) for triggering the CSI report and a 1^{st} symbol of an uplink data channel used to carry the CSI report, or represents a minimum quantity of symbols between an end moment of DCI for triggering the CSI report and a start moment of the CSI report. Z' represents a minimum quantity of symbols between a last symbol of a CSI-RS resource currently actually used to calculate the CSI report and the 1^{st} symbol of the uplink data channel used to carry the CSI report. The following uses an example for description with reference to FIG. 3. As shown in FIG. 3, assuming that the end moment of the DCI is T1, an end moment of the last symbol of the CSI-RS resource currently actually used to calculate used to the CSI report is T2, and a start moment of the 1^{st} symbol of the uplink data channel used to carry the CSI report is T3, Z=T3-T1, and Z'=T2-T1.

It should be noted that different configuration parameters *µ* may correspond to different values of Z, and different configuration parameters *µ* may correspond to different Z'.

In the current protocol, a correspondence between a CSI calculation delay and the configuration parameter *µ* for the Type II codebook is shown in the following Table 1.

**Table 1**

| *µ* | CSI calculation delay (quantity of symbols) | |
|---|---|---|
| | Z | Z' |
| 0 | 40 | 37 |
| 1 | 72 | 69 |
| 2 | 141 | 140 |
| 3 | 152 | 140 |
| 5 | 608 | 560 |
| 6 | 1216 | 1120 |

*µ* is a configuration parameter corresponding to a subcarrier spacing. Different configuration parameters correspond to different subcarrier spacings. A relationship between the subcarrier spacing and a value of the configuration parameter *µ* is shown in the following Table 2:

**Table 2**

| Subcarrier spacing=15*2*^{µ}* kilohertz (kilohertz, kHz) | Configuration parameter *µ* |
|---|---|
| 15 kHz | 0 |
| 30 kHz | 1 |
| 60 kHz | 2 |
| 120 kHz | 3 |

However, in the foregoing solution for determining the CSI calculation delay, additional calculation complexity caused by increasing the Doppler domain dimension, that is, the quantity of domain units, is not considered. When the quantity of time domain units for reporting the PMI is greater than or equal to 1, how to report the CSI report is a technical problem to be urgently resolved.

In addition, in the CSI measurement and reporting procedure, a quantity of CSI processing units (CSI processing units, CPUs) occupied by the terminal device to perform CSI measurement is determined based on a quantity of CSI-RS resources corresponding to a to-be-reported CSI report. For example, if there are K CSI-RS resources, K CPUs need to be occupied.

However, in the solution for determining, based on the quantity of CSI-RS resources, the quantity of CPUs occupied to perform CSI measurement, impact of the Doppler domain on the CPU occupation is not considered. Therefore, how to match the quantity of CPUs needed in a CSI report reporting process is an urgent problem to be resolved.

The following describes technical solutions of this application with reference to the accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, assemblies, modules, and the like. It should be appreciated and understood that, each system may include another device, component, module, and the like, and/or may not include all devices, components, modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is to present a concept in a specific manner.

First, in this application, "indicate" may include "directly indicate" and "indirectly indicate". When a piece of information is described to indicate A, the information may directly indicate A or indirectly indicate A, but it does not indicate that the information definitely carries A.

Information indicated by indication information is referred to as to-be-indicated information. In a specific implementation process, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to a conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, "first", "second", and various numeric numbers in the following embodiments are merely distinguished for ease of description, and are not intended to limit the scope of embodiments of this application. For example, the terms are used to distinguish between different indication information.

Third, "predefinition" or "preconfiguration" may be implemented by pre-storing corresponding code or a corresponding table in a device (for example, including a terminal device and a network device) or in another manner that can be used to indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fourth, a "protocol" in embodiments of this application may be a standard protocol in the communication field, for example, may include an LTE protocol, an NR protocol, and a related protocol applied to a future communication system. This is not limited in this application.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

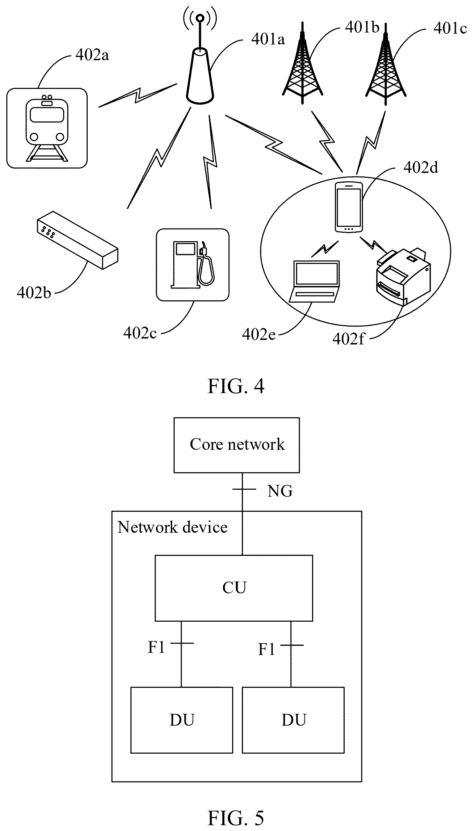

For ease of understanding embodiments of this application, a communication system shown in FIG. 4 is first used as an example to describe in detail a communication system applicable to an embodiment of this application. For example, FIG. 4 is a diagram of an architecture of a communication system to which a method is applicable according to an embodiment of this application.

As shown in FIG. 4, the communication system includes network devices and terminal devices.

For example, the network devices may include a network device 401a to a network device 401c, and the terminal device may include a terminal device 402a to a terminal device 402f. The terminal device may be connected to the network device in a wireless manner, and the network device may be connected to a core network (not shown in FIG. 4) in a wired or wireless manner.

The network device is a device that is located on a network side of the communication system and that has a wireless transceiver function, or a chip or a chip system that may be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, eNB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP or transmission point, TP), or the like; may be a gNB or a transmission point (TRP or TP) in a 5G system, for example, a new radio (new radio, NR) system, or one antenna panel or a group of antenna panels (including a plurality of antenna panels) of a base station in the 5G system; or may be a network node such as a baseband unit (BBU) or a distributed unit (distributed unit, DU) included in a gNB or a transmission point, a road side unit (road side unit, RSU) having a base station function, or the like.

The terminal device is a terminal accessing the communication system and having a wireless transceiver function, or a chip or a chip system that may be disposed in the terminal. The terminal device may also be referred to as an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is disposed inside a vehicle as one or more components or units. The vehicle may implement the channel state information measurement method provided in this application by using the vehicle-mounted module, the vehicle-mounted assembly, the vehicle-mounted component, the vehicle-mounted chip, or the vehicle-mounted unit that is disposed inside the vehicle.

It should be noted that, in FIG. 4, roles of the network device and the terminal device may be relative. For example, the terminal device 402d in FIG. 4 may be configured as a mobile base station. For the terminal device 402e or the terminal device 402f that accesses the network device (any one of the network device 401a to the network device 401c) via the terminal device 402d, the terminal device 402d is a network device. For the network device (any one of the network device 401a to the network device 401c), the terminal device 402d is a terminal device.

In embodiments of this application, both the network device and the terminal device may be collectively referred to as communication apparatuses. The network device 401a to the network device 401c in FIG. 4 may be referred to as communication apparatuses having a network device function, and the terminal device 402a to the terminal device 402f in FIG. 4 may be referred to as communication apparatuses having a terminal device function.

It should be understood that, FIG. 4 is merely a simplified diagram used as an example for ease of understanding. The communication system may further include other network devices and/or other terminal devices that are not shown in FIG. 4.

Optionally, in a possible deployment form, as shown in FIG. 5, a network device may include a central unit (central unit, CU) and/or a distributed unit (distributed unit, DU). Further, the network device may further include an active antenna unit (active antenna unit, AAU) (not shown in FIG. 5).

The CU may be connected to the DU through a midhaul (F1) interface. The CU may be connected to a core network through an NG interface.

Optionally, the CU may implement a part of functions of the network device, and the DU implements another part of functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. It should be noted that such protocol layer division is merely an example, and division may alternatively be performed at another protocol layer.

Optionally, the AAU may implement some physical layer processing functions, radio frequency processing, and a function related to an active antenna. The information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU.

Optionally, in the structure of the network device shown in FIG. 5, signaling generated by the CU may be sent to a terminal device via the DU, or signaling generated by the terminal device may be sent to the CU via the DU. The DU may transparently transmit the signaling to the terminal device or the CU by directly encapsulating the signaling at a protocol layer without parsing the signaling.

In different systems, the CU or the DU may also have different names, but a person skilled in the art may understand meanings thereof. For example, in an ORAN system, the CU may also be referred to as an O-CU (open CU), and a DU may also be referred to as an O-DU. For ease of description, the CU and the DU are used as examples for description in this application. The CU or the DU in this application may be implemented by using a software module, a hardware module, or a combination of the software module and the hardware module.

It needs to be noted that the channel state information measurement method provided in embodiments of this application is applicable to the terminal device and the network device shown in FIG. 4. For a specific implementation, refer to the following method embodiments. Details are not described herein again.

It should be noted that, the solutions in embodiments of this application may be further applied to another communication system, and a corresponding name may also be replaced with a name of a corresponding function in the another communication system.

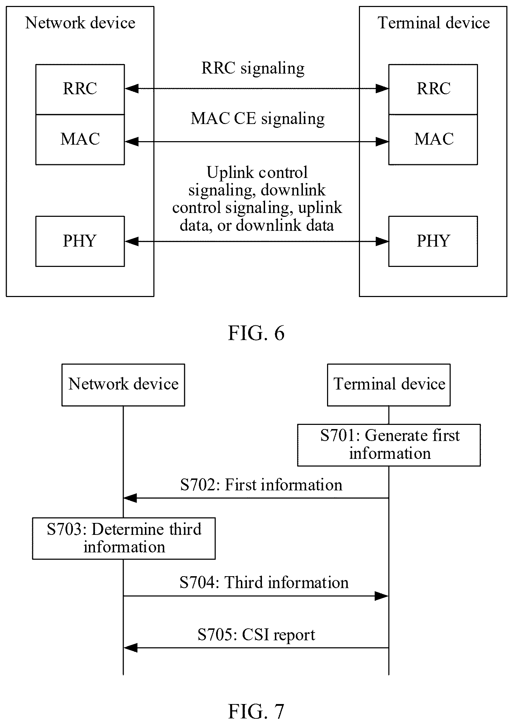

As shown in FIG. 6, a network device includes an RRC signaling exchange module (an RRC in FIG. 6), a MAC signaling exchange module (a MAC in FIG. 6), and a PHY signaling and data exchange module (a PHY in FIG. 6). A terminal device includes an RRC signaling exchange module, a MAC signaling exchange module, and a PHY signaling and data exchange module.

The network device and the terminal device may exchange RRC signaling via the RRC signaling exchange module.

The network device and the terminal device may exchange media access control control element (media access control control element, MAC CE) signaling via the MAC signaling exchange module.

The network device and the terminal device may exchange one or more of the following via the PHY exchange module: uplink control signaling, downlink control signaling (for example, DCI), uplink data, and downlink data.

The following specifically describes, with reference to FIG. 7 to FIG. 9, methods provided in embodiments of this application.

For example, FIG. 7 is a schematic flowchart 1 of a capability reporting method according to an embodiment of this application. The capability reporting method is applicable to communication between the network device and the terminal device shown in FIG. 4.

As shown in FIG. 7, the capability reporting method includes the following steps.

S701: The terminal device generates first information.

The first information includes at least one piece of capability information of the terminal device, and the capability information indicates a quantity of time domain units supported by the terminal device for a PMI.

In some possible embodiments, a quantity of pieces of capability information in the at least one piece of capability information is determined based on a type of a quantity of time domain units supported by the terminal device for each type of PMI.

For example, the quantity of pieces of capability information in the at least one piece of capability information is the same as the quantity of time domain units supported by the terminal device for each type of PMI. When a maximum quantity of time domain units supported by the terminal device for the PMI is greater than 1, the at least one piece of capability information may include a plurality of pieces of capability information. For example, if the maximum quantity of time domain units supported by the terminal device for the PMI is greater than or equal to 8, quantities 1, 2, 4, and 8 of time domain units for the PMI each correspond to one piece of capability information.

For example, the quantity of time domain units supported by the terminal device for the PMI may be 1, 2, 4, or 8. In a possible design solution, each piece of capability information may further indicate one or more of the following: information about a quantity of ports supported by the terminal device in one CSI-RS resource, information about a quantity of CSI-RS resources supported by the terminal device, or information about a total quantity of ports supported by the terminal device in CSI-RS resources.

For example, the capability information may alternatively indicate information about a quantity of ports supported by the terminal device in one CSI-RS resource and information about a quantity of CSI-RS resources supported by the terminal device. Alternatively, the capability information may alternatively indicate information about a quantity of CSI-RS resources supported by the terminal device and information about a total quantity of ports supported by the terminal device in CSI-RS resources. Alternatively, the capability information may alternatively indicate information about a quantity of ports supported by the terminal device in one CSI-RS resource and information about a total quantity of ports supported by the terminal device in CSI-RS resources.

For another example, the capability information may alternatively indicate information about a quantity of ports supported by the terminal device in one CSI-RS resource, information about a quantity of CSI-RS resources supported by the terminal device, and information about a total quantity of ports supported by the terminal device in CSI-RS resources.

It may be understood that, when the first information includes a plurality of pieces of capability information of the terminal device, each piece of capability information of the terminal device may indicate the quantity of time domain units supported by the terminal device for the PMI, and indicate one or more of the following: the information about the quantity of ports supported by the terminal device in one CSI-RS resource, the information about the quantity of CSI-RS resources supported by the terminal device, or the information about the total quantity of ports supported by the terminal device in the CSI-RS resources; and information in different capability information of the terminal device may vary.

It should be noted that the information about the quantity of the CSI-RS resources supported by the terminal device or the information about the total quantity of ports supported by the terminal device in the CSI-RS resources that is indicated by the capability information may be described for one CSI report, or may be described for all carriers (component carriers, CCs).

In this way, the network device may obtain the actual capability information of the terminal device, and configure, for the terminal device based on the actual capability information of the terminal device, a parameter for reporting the CSI report, for example, the quantity of time domain units corresponding to the CSI report, so that a capability requirement of the terminal device for determining the CSI report can fall within a capability range of the terminal device.

For ease of understanding, the following further describes the capability information in different cases.

Case 1: The capability information of the terminal device may include the quantity of time domain units supported by the terminal device for the PMI and one or a combination of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

In Case 1, the information about the quantity of ports supported by the terminal device in one CSI-RS resource may be indicated by using the quantity of ports supported by the terminal device in one CSI-RS resource. The information about the quantity of CSI-RS resources supported by the terminal device may be indicated by using a quantity of CSI-RS resources supported by the terminal device on all carriers. The information about the total quantity of ports supported by the terminal device in the CSI-RS resources may be indicated by using the total quantity of ports supported by the terminal device in all the CSI-RS resources on all the carriers.

It may be understood that the total quantity of ports supported by the terminal device in all the CSI-RS resources on all the carriers is less than or equal to a product of the quantity of ports supported by the terminal device in one CSI-RS resource and the quantity of CSI-RS resources supported by the terminal device on all the carriers.

The quantity of time domain units supported by the terminal device for the PMI may be a total quantity of time domain units allowed by the terminal device for PMIs in all to-be-reported CSI reports. For example, the quantity of time domain units supported by the terminal device for the PMI may be implemented by using a maximum value, allowed by the terminal device, of the total quantity of time domain units for the PMIs in all the to-be-reported CSI reports; or the quantity of time domain units supported by the terminal device for the PMI may be a quantity of time domain units allowed by the terminal device for a PMI in any one of the to-be-reported CSI reports. For example, the quantity of time domain units supported by the terminal device for the PMI may be implemented by using a maximum quantity of time domain units allowed by the terminal device for a PMI in any one of the to-be-reported CSI reports. A quantity of ports supported by the terminal device in one CSI-RS resource is a quantity of ports in any one of all the CSI-RS resources. A quantity of ports supported by the terminal device in one CSI-RS resource may be implemented by using a maximum quantity of ports supported by the terminal device in one CSI-RS resource.

The quantity of CSI-RS resources supported by the terminal device on all the carriers is a sum of CSI-RS resources allowed by the terminal device on all the carriers. For example, it is assumed that carriers on which the terminal device operates include a carrier #0 to a carrier #2, a quantity of CSI-RS resources supported by the terminal device on all the carriers is a sum of a quantity of CSI-RS resources on the carrier #0, a quantity of CSI-RS resources on the carrier #1, and a quantity of CSI-RS resources on the carrier #2. The quantity of CSI-RS resources supported by the terminal device on all the carriers may be implemented by using a maximum value, allowed by the terminal device, of a sum of CSI-RS resources on all the carriers. The total quantity of ports supported by the terminal device in all the CSI-RS resources on all the carriers is a sum of quantities of ports allowed by the terminal device in all the CSI-RS resources on all the carriers. For example, it is assumed that carriers on which the terminal device operates include a carrier #0 to a carrier #2. The carrier #0 includes three CSI-RS resources, and corresponding quantities of ports are 2, 2, and 4 in sequence; the carrier #1 includes two CSI-RS resources, and corresponding quantities of ports are 2 and 4 in sequence; and the carrier #1 includes two CSI-RS resources, and corresponding quantities of ports are 2 and 4 in sequence. A total quantity of ports supported by the terminal device in all the CSI-RS resources on all the carriers may be implemented by using a maximum value of ports allowed by the terminal device in all the CSI-RS resources on all the carriers.

It may be understood that the carrier in this embodiment of this application is a carrier used to carry information exchanged between the terminal device and the network device.

In a possible implementation solution, the capability information includes the quantity of time domain units supported by the terminal device for the PMI, the quantity of ports supported by the terminal device in one CSI-RS resource, the quantity of CSI-RS resources supported by the terminal device on all carriers, and a combination of the total quantity of ports supported by the terminal device in all the CSI-RS resources on all the carriers. In this case, the capability information is implemented by using a quadruplet, and elements included in the quadruplet are the quantity of time domain units supported by the terminal device for the PMI, the quantity of ports supported by the terminal device in one CSI-RS resource, the quantity of CSI-RS resources supported by the terminal device on all the carriers, and the total quantity of ports supported by the terminal device in all the CSI-RS resources on all the carriers.

A format of the quadruplet used by the terminal device to report the capability information may be {the quantity of time domain units supported by the terminal device for the PMI, the quantity of ports supported by the terminal device in one CSI-RS resource, the quantity of CSI-RS resources supported by the terminal device on all the carriers, the total quantity of ports supported by the terminal device in all the CSI-RS resources on all the carriers}.

Example 1.1: If the quantity of time domain units supported by the terminal device for the PMI includes 1, the quantity of ports supported by the terminal device in one CSI-RS resource is 4, the quantity of CSI-RS resources supported by the terminal device on all the carriers is 2, the total quantity of ports supported by the terminal device in all the CSI-RS resources on all the carriers is 32, the capability information reported by the terminal device may be {1, 4, 2, 32}.

Example 1.2: If the quantity of time domain units supported by the terminal device for the PMI includes 2, the quantity of ports supported by the terminal device in one CSI-RS resource is 8, the quantity of CSI-RS resources supported by the terminal device on all the carriers is 4, the total quantity of ports supported by the terminal device in all the CSI-RS resources on all the carriers is 32, the capability information reported by the terminal device may be {2, 8, 4, 32}.

Example 1.3: If the quantity of time domain units supported by the terminal device for the PMI includes 4, the quantity of ports supported by the terminal device in one CSI-RS resource is 12, the quantity of CSI-RS resources supported by the terminal device on all the carriers is 2, the total quantity of ports supported by the terminal device in all the CSI-RS resources on all the carriers is 20, the capability information reported by the terminal device may be {4, 12, 2, 20}.

Example 1.4: If the quantity of time domain units supported by the terminal device for the PMI includes 8, the quantity of ports supported by the terminal device in one CSI-RS resource is 4, the quantity of CSI-RS resources supported by the terminal device on all the carriers is 16, the total quantity of ports supported by the terminal device in all the CSI-RS resources on all the carriers is 64, the capability information reported by the terminal device may be {8, 4, 16, 64}. It may be understood that there may be the plurality of pieces of capability information in the first information. In this case, the capability information reported by the terminal device may be a plurality of combinations, for example, a quadruplet. For example, assuming that the quantity of time domain units supported by the terminal device for the PMI is 1, 2, 4, and 8, and corresponding quadruplets sequentially correspond to the quadruplets in Example 1.1 to Example 1.4, the capability information reported by the terminal device includes all the quadruplets in Example 1.1 to Example 1.3, namely, {1, 4, 2, 32}, {2, 8, 4, 32}, {4, 12, 2, 20}, and {8, 4, 16, 64}.

In this way, when a plurality of CSI reports are reported, a capability requirement of the terminal device for reporting the plurality of CSI reports may match an actual capability of the terminal device, to further improve effectiveness of CSI report reporting.

Case 2: The capability information may include the quantity of time domain units supported by the terminal device for the PMI and one or a combination of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

In Case 2, the information about the quantity of ports supported by the terminal device in one CSI-RS resource is indicated by using the quantity of ports supported by the terminal device in one CSI-RS resource corresponding to the CSI report. The information about the quantity of CSI-RS resources supported by the terminal device is indicated by using the quantity of CSI-RS resources that correspond to the CSI report and that is supported by the terminal device. The information about the total quantity of ports supported by the terminal device in the CSI-RS resources is indicated by using the total quantity of ports supported by the terminal device in all the CSI-RS resources corresponding to the CSI report.

The quantity of time domain units supported by the terminal device for the PMI may be a quantity of time domain units allowed by the terminal device in the CSI report, and may be implemented by using a maximum value of the quantity of time domain units allowed by the terminal device in the CSI report. The quantity of ports supported by the terminal device in one CSI-RS resource corresponding to the CSI report may be a quantity of ports in any one of all the CSI-RS resources corresponding to the CSI report. The quantity of ports supported by the terminal device in one CSI-RS resource corresponding to the CSI report may be implemented by using a maximum value of ports supported by the terminal device in one CSI-RS resource corresponding to the CSI report. The quantity of CSI-RS resources that correspond to the CSI report and that is supported by the terminal device may be implemented by using a maximum value of CSI-RS resources that correspond to the CSI report and that is supported by the terminal device. The total quantity of ports supported by the terminal device in all the CSI-RS resources corresponding to the CSI report may be implemented by using a maximum value of the total quantity of ports supported by the terminal device in all the CSI-RS resources corresponding to the CSI report.

In a possible design solution, the capability information includes the quantity of time domain units supported by the terminal device for the PMI, the quantity of ports supported by the terminal device in one CSI-RS resource corresponding to the CSI report, the quantity of CSI-RS resources that correspond to the CSI report and that is supported by the terminal device, and a combination of the total quantity of ports supported by the terminal device in all the CSI-RS resources corresponding to the CSI report. In this case, the capability information may be implemented by using a quadruplet, elements included in the quadruplet are the quantity of time domain units supported by the terminal device for the PMI, the quantity of ports supported by the terminal device in one CSI-RS resource corresponding to the CSI report, the quantity of CSI-RS resources that correspond to the CSI report and that is supported by the terminal device, and the total quantity of ports supported by the terminal device in all the CSI-RS resources corresponding to the CSI report. For example, a format of the quadruplet of the capability information may be {the quantity of time domain units supported by the terminal device for the PMI, the quantity of ports supported by the terminal device in one CSI-RS resource corresponding to the CSI report, the quantity of CSI-RS resources that correspond to one CSI report and that is supported by the terminal device, and the total quantity of ports supported by the terminal device in all the CSI-RS resources corresponding to the CSI report}.

For an implementation principle of the quadruplet, refer to the related descriptions in Example 1.1 to Example 1.3. Details are not described herein again.

It may be understood that the quadruplets in Case 1 and Case 2 are merely used as examples for description. During actual implementation, the quadruplet may alternatively be of another structure. Details are not described herein.

Case 3: The capability information may include a correspondence between the quantity of time domain units supported by the terminal device for the PMI and a first combination supported by the terminal device, which is referred to as a first correspondence below. The first combination may include one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

In Case 3, for an implementation principle of the information about the quantity of ports supported by the terminal device in one CSI-RS resource, the information about the quantity of CSI-RS resources supported by the terminal device, and the information about the total quantity of ports supported by the terminal device in the CSI-RS resources, refer to the related descriptions in Case 1. Details are not described herein again.

In this case, it may be understood that one triplet is separately reported for one or more of the following: different values, different value sets, and different ranges of the quantity of time domain units supported by the terminal device for the PMI. It may be understood that different values of the quantity of time domain units supported by the terminal device for the PMI may correspond to a same first combination, or different values of the quantity of time domain units supported by the terminal device for the PMI may correspond to different first combinations. In this way, an information amount of the first information can be reduced, thereby reducing resource overheads. In addition, a quantity of time domain units supported by a same terminal device for the PMI may correspond to a plurality of different first combinations. An element in the triplet includes one or more of the following: the quantity of ports supported by the terminal device in one CSI-RS resource, the quantity of CSI-RS resources supported by the terminal device on all the carriers, or the total quantity of ports supported by the terminal device in all the CSI-RS resources on all the carriers. For example, a structure of the triplet may be {the quantity of ports supported by the terminal device in one CSI-RS resource, the quantity of CSI-RS resources supported by the terminal device on all the carriers, the total quantity of ports supported by the terminal device in all the CSI-RS resources on all the carriers}. The following uses an example to describe the correspondence between the first combination and the quantity of time domain units for the PMI, where the quantity of time domain units of the PMI is N4.

For example, the terminal device may separately report the first combination for different value ranges of N4. For example, when N4=1, one first combination may be reported; or when N4>1, one first combination may be reported.

For another example, the terminal device may separately report one group of first combinations for a value set of N4. For example, N4=1, 2, 4, or 8. The terminal device separately reports one group of first combinations for N4=1, N4={2, 4}, and N4=8.

For another example, the terminal device may report a plurality of different first combinations for N4=1.

It may be understood that, in Case 3, the terminal device may alternatively not report a first combination for each value of the quantity of time domain units supported by the terminal device for the PMI and some values or a value set of N4. For example, when the quantity of time domain units is 8, the terminal device may not report the first combination. In this case, the first information implicitly indicates that a quantity of time domain units not supported by the terminal device for the PMI is 8.

In this way, when a plurality of CSI reports are reported, a capability requirement of the terminal device for reporting the plurality of CSI reports may match an actual capability of the terminal device, to further improve effectiveness of CSI report reporting.

Case 4: The capability information may include a correspondence between the quantity of time domain units supported by the terminal device for the PMI and a second combination supported by the terminal device, which is referred to as a second correspondence below. The second combination may include one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

In Case 4, for an implementation principle of the information about the quantity of ports supported by the terminal device in one CSI-RS resource, the information about the quantity of CSI-RS resources supported by the terminal device, and the information about the total quantity of ports supported by the terminal device in the CSI-RS resources, refer to the related descriptions in Case 2. Details are not described herein again.

In this case, it may be understood that one triplet is separately reported for one or more of the following: different values, different value sets, and different ranges of the quantity of time domain units supported by the terminal device for the PMI. It may be understood that different values of the quantity of time domain units supported by the terminal device for the PMI may correspond to a same second combination, or different values of the quantity of time domain units supported by the terminal device for the PMI may correspond to different second combinations. Elements in the triplet include the quantity of ports supported by the terminal device in one CSI-RS resource corresponding to the CSI report, the quantity of CSI-RS resources that correspond to one CSI report and that is supported by the terminal device, and the total quantity of ports supported by the terminal device in all the CSI-RS resources corresponding to the CSI report. For example, a structure of the triplet may be {the quantity of ports supported by the terminal device in one CSI-RS resource corresponding to the CSI report, the quantity of CSI-RS resources that correspond to one CSI report and that is supported by the terminal device, the total quantity of ports supported by the terminal device in all the CSI-RS resources corresponding to the CSI report}.

For an implementation principle of the capability information in Case 4, refer to the related descriptions in Case 3. A difference lies in that specific content reported in Case 4 is as follows: the quantity of ports supported by the terminal device in one CSI-RS resource corresponding to the CSI report, the quantity of CSI-RS resources that correspond to one CSI report and that is supported by the terminal device, and the total quantity of ports supported by the terminal device in all the CSI-RS resources corresponding to the CSI report. Details are not described herein again.

Case 5: The capability information may include a correspondence between second information and a third combination. The second information is related to the quantity of time domain units supported by the terminal device for the PMI and frequency domain information. The frequency domain information indicates a quantity of subbands that carry a PMI in a subband that carries CQI. The third combination may include one or more of the following: a quantity of ports supported by the terminal device in one CSI-RS resource, a quantity of the CSI-RS resources supported by the terminal device on all carriers, or a total quantity of ports supported by the terminal device in all CSI-RS resources on all the carriers.

In Case 5, for an implementation principle of the quantity of time domain units supported by the terminal device for the PMI, the information about the quantity of ports supported by the terminal device in one CSI-RS resource, the information about the quantity of CSI-RS resources supported by the terminal device, and the information about the total quantity of ports supported by the terminal device in the CSI-RS resources, refer to the related descriptions in Case 1. Details are not described herein again.

For example, that the second information is related to the quantity of time domain units supported by the terminal device for the PMI and frequency domain information may include: a product of the quantity of time domain units supported by the terminal device for the PMI and the quantity of subbands that carry the PMI in the subband that carries the CQI.

For an implementation principle of the third combination, refer to the implementation principle of the first combination. Details are not described herein again.

Case 6: The capability information may include a correspondence between second information and a fourth combination. The second information may indicate the quantity of time domain units supported by the terminal device for the PMI and frequency domain information. The frequency domain information indicates a quantity of subbands that carry a PMI in a subband that carries CQI. The fourth combination may include one or more of the following: a quantity of ports supported by the terminal device in one CSI-RS resource corresponding to a CSI report, the quantity of CSI-RS resources that corresponding to one CSI report and that is supported by the terminal device, or the total quantity of ports supported by the terminal device in all CSI-RS resources corresponding to the CSI report.

In Case 6, for an implementation principle of the quantity of time domain units supported by the terminal device for the PMI, the information about the quantity of ports supported by the terminal device in one CSI-RS resource, the information about the quantity of CSI-RS resources supported by the terminal device, and the information about the total quantity of ports supported by the terminal device in the CSI-RS resources, refer to the related descriptions in Case 2. Details are not described herein again.

For an implementation principle of the fourth combination, refer to the implementation principle of the second combination. Details are not described herein again.

Case 7: The capability information may include the quantity of time domain units supported by the terminal device for the PMI, a total quantity of ports supported by the terminal device in all CSI-RS resources on all carriers, a quantity of ports supported by the terminal device in one CSI-RS resource corresponding to a CSI report, or a quantity of CSI-RS resources that correspond to the CSI report and that is supported by the terminal device.

In Case 7, for the quantity of time domain units supported by the terminal device for the PMI, the information about the quantity of ports supported by the terminal device in one CSI-RS resource, and the information about the quantity of CSI-RS resources supported by the terminal device, refer to the related descriptions in Case 2. For the information about the total quantity of ports supported by the terminal device in the CSI-RS resources, refer to the related descriptions in Case 1. Details are not described herein again.

For example, a structure of the capability information may be {the quantity of time domain units supported by the terminal device for the PMI, the quantity of ports supported by the terminal device in one CSI-RS resource corresponding to the CSI report, the quantity of CSI-RS resources that correspond to one CSI report and that is supported by the terminal device}, the total quantity of ports supported by the terminal device in all the CSI-RS resources on all the carriers}.

It may be understood that the capability information may further include a total quantity of all the CSI-RS resources on all the carriers.

Case 8: The capability information may include the quantity of time domain units supported by the terminal device for the PMI, a quantity of ports supported by the terminal device in one CSI-RS resource corresponding to a CSI report, and a quantity of CSI-RS resources supported by the terminal device on all carriers, or total quantity of ports supported by the terminal device in CSI-RS resources corresponding to all CSI reports.

In Case 8, for the quantity of time domain units supported by the terminal device for the PMI and the information about the quantity of ports supported by the terminal device in one CSI-RS resource, refer to the related descriptions in Case 2. For the information about the quantity of CSI-RS resources supported by the terminal device and the information about the total quantity of ports supported by the terminal device in the CSI-RS resources, refer to the related descriptions in Case 1. Details are not described herein again.

For example, a structure of the capability information may be {{the quantity of time domain units supported by the terminal device for the PMI, the quantity of ports supported by the terminal device in one CSI-RS resource corresponding to the CSI report}, the quantity of CSI-RS resources supported by the terminal device on all the carriers, the total quantity of ports supported by the terminal device in the CSI-RS resources corresponding to all the CSI reports}.

It may be understood that, when the capability information indicates one or two of the following: the information about the quantity of ports supported by the terminal device in one CSI-RS resource, the information about the quantity of CSI-RS resources supported by the terminal device, or the information about the total quantity of ports in the CSI-RS resources supported by the terminal device, an implementation principle of the capability information is similar to that in Case 1 to Case 8. Details are not described herein again.

In addition, when there are a plurality of pieces of capability information, the plurality of pieces of capability information may include a plurality of pieces of capability information in the foregoing case 1 to case 8, or include a plurality of different pieces of capability information in a same case, provided that the foregoing descriptions comply with logic. Details are not described herein again.

S702: The terminal device sends the first information to the network device. Correspondingly, the network device receives the first information from the terminal device.

For example, the first information may be carried on a PUSCH or a PUCCH.

S703: The network device determines third information based on the first information. In other words, the third information is obtained based on the first information.

The third information indicates a quantity of time domain units corresponding to one of at least one to-be-reported CSI report, and the quantity of time domain units corresponding to one of the at least one CSI report is a quantity of time domain units for at least one type of PMI.

The quantity of time domain units for the at least one type of PMI is a quantity of time domain units for a PMI indicated by each of the at least one piece of capability information. For example, a type of a quantity of time domain units for a PMI in the quantity of time domain units for the at least one type of PMI is the same as a quantity of pieces of capability information in the at least one piece of capability information. The third information indicates the quantity of time domain units corresponding to one of the at least one to-be-reported CSI report, namely, a quantity of time domain units corresponding to each of the at least one CSI report.

The at least one CSI report is one or more CSI reports. For example, the CSI report may be a CSI report corresponding to an activated CSI-RS port or CSI-RS resource.

A CSI-RS corresponding to the activated CSI-RS port or CSI-RS resource may be aperiodic, semi-persistent, or periodic.

For example, for an aperiodic CSI-RS, activation time of a corresponding CSI-RS port or CSI-RS resource starts from an end moment of a PDCCH for reporting of a CSI report, and ends at an end moment of a PUSCH that carries the CSI report corresponding to the aperiodic CSI-RS.

For example, for a semi-persistent CSI-RS, activation time of a corresponding CSI-RS port or CSI-RS resource starts from an end moment of activating a CSI-RS command, and ends at an end moment of deactivating the semi-persistent CSI-RS command.

For example, for a periodic CSI-RS, activation time of a corresponding CSI-RS port or CSI-RS resource starts when the periodic CSI-RS is configured by using higher layer signaling, and ends when the configuration of the periodic CSI-RS is released.

It should be noted that the activation time of the CSI-RS resource is merely used as an example. During actual implementation, there may be another implementation. For example, for the semi-persistent CSI-RS, the activation time of the CSI-RS resource may be similar to that of the periodic CSI-RS. Details are not described herein again.

The quantity of time domain units corresponding to one of the at least one CSI report is the quantity of time domain units supported by the terminal device for the PMI, that is, the quantity of time domain units corresponding to one of the at least one CSI report is less than or equal to the quantity of time domain units supported by the terminal device for the PMI.

Assuming that the quantity of time domain units supported by the terminal device for the PMI is 4, and all at least one to-be-reported CSI report includes a CSI report #0 and a CSI report #1, a sum of a quantity of time domain units corresponding to the CSI report #0 and a quantity of time domain units corresponding to the CSI report #1 is less than or equal to 4.

It may be understood that a quantity of time domain units corresponding to a CSI report is a quantity of time domain units for reporting the CSI report for a PMI.

In some possible design solutions, the third information further indicates one or more of the following: a quantity of ports in each CSI-RS resource corresponding to each of the at least one CSI report, or a quantity of CSI-RS resources corresponding to each of the at least one CSI report.

In this case, the quantity of ports in each CSI-RS resource corresponding to the at least one CSI report is related to the information about the quantity of ports supported by the terminal device in one CSI-RS resource; the quantity of CSI-RS resources corresponding to the at least one CSI report is related to the information about the quantity of CSI-RS resources supported by the terminal device; and a quantity of all ports in the CSI-RS resource corresponding to each of the at least one CSI report is related to the information about the total quantity of ports supported by the terminal device in the CSI-RS resource. In other words, the third information meets the capability information, that is, the third information meets a capability of the terminal device.

For ease of understanding, the following describes, with reference to different cases of the capability information, that the third information meets the capability information.

When the capability information is the same as that in Case 1, and the quantity of time domain units supported by the terminal device for the PMI is the total quantity of time domain units allowed by the terminal device for the PMIs in all the to-be-reported CSI reports, a quantity of time domain units corresponding to one of the at least one to-be-reported CSI report is less than or equal to the quantity of time domain units supported by the terminal device for the PMI; the quantity of ports in each CSI-RS resource corresponding to each of the at least one CSI report is less than or equal to the quantity of ports supported by the terminal device in one CSI-RS resource; a sum of quantities of CSI-RS resources corresponding to all of the at least one CSI report is less than or equal to the quantity of CSI-RS resources supported by the terminal device on all the carriers; and a sum of ports in all CSI-RS resources corresponding to all of the at least one CSI report is less than or equal to the combination of the total quantity of ports supported by the terminal device in all the CSI-RS resources on all the carriers. The following provides further descriptions with reference to the CSI report.

It is assumed that the at least one to-be-reported CSI report includes two CSI reports in total: a CSI report #0 and a CSI report #1, and the capability information is shown in Example 1.3, namely, {8, 4, 16, 64}. In this case, a sum of a quantity of time domain units corresponding to the CSI report #0 and a quantity of time domain units corresponding to the CSI report #1 is less than or equal to 8; a sum of a quantity of CSI-RS resources corresponding to the CSI report #0 and a quantity of CSI-RS resources corresponding to the CSI report #1 is less than or equal to 4; a quantity of ports of a quantity in each CSI-RS resource corresponding to the CSI report #0 is less than or equal to 16; a quantity of ports in each CSI-RS resource corresponding to the CSI report #1 is less than or equal to 16; and a sum of a quantity of ports of a quantity in all CSI-RS resources corresponding to the CSI report #0 and a quantity of ports in all CSI-RS resources corresponding to the CSI report #1 is less than or equal to 64. For example, in the third information, the quantity of time domain units corresponding to the CSI report #0 is 2, the quantity of CSI-RS resources corresponding to the CSI report #0 is 4, and quantities of ports in the four CSI-RS resources are 4, 4, 4, and 4 respectively; the quantity of time domain units corresponding to the CSI report #1 is 2, the quantity of CSI-RS resources corresponding to the CSI report #1 is 8, quantities of ports corresponding to the eight CSI-RS resources are 2, 2, 2, 2, 2, 2, 2, and 2 respectively, and the total quantity of time domain units configured by using the third information for the PMI is 4, and is less than 8; in the resources of all the CSI reports, a maximum quantity of ports corresponding to one CSI-RS resource is 4, and is equal to 4; a quantity of CSI-RS resources corresponding to the CSI reports is 12 and is less than 16; and a quantity of ports for all the CSI reports is 32, and is less than 64. It can be learned that, in this case, parameters configured by using the third information of the terminal device meets the capability of the terminal device.

When the capability information is the same as that in Case 1, and the quantity of time domain units supported by the terminal device for the PMI may be the quantity of time domain units allowed by the terminal device for the PMI in any one of the to-be-reported CSI reports, an implementation principle and the capability information of S703 are the same as those in Case 1, and a case in which the quantity of time domain units supported by the terminal device for the PMI is the total quantity of time domain units allowed by the terminal device for the PMIs in all the to-be-reported CSI reports is similar. A difference lies in the quantity of time domain units corresponding to each of the at least one to-be-reported CSI report is less than or equal to the quantity of time domain units supported by the terminal device for the PMI. The quantity of time domain units supported by the terminal device for the PMI is 8. It is assumed that the at least one to-be-reported CSI report includes two CSI reports: a CSI report #0 and a CSI report #1, and a quadruplet of the capability information is {8, 4, 16, 64}. In this case, both a quantity of time domain units corresponding to the CSI report #0 and a quantity of time domain units corresponding to the CSI report #1 are less than or equal to 8; and a quantity of ports in each CSI-RS resource corresponding to the CSI report #1 is less than or equal to 8.

When the capability information includes less information, an implementation principle of S703 is similar to that in the foregoing case 1; and for an implementation principle of S703 in any one of Case 2 to Case 8, refer to the implementation principle of S703 in Case 1. Details are not described herein again.

It may be understood that, when there are a plurality of pieces of capability information in the first information, the third information meets any piece of capability information in the first information. Details are not described herein again.

In this embodiment of this application, the network device may trigger the reporting of the CSI report. In this case, the method provided in FIG. 7 may further include S704.

S704: The network device sends the third information to the terminal device. Correspondingly, the terminal device receives the third information from the network device.

The third information may be carried in one or more of the following: RRC signaling, a MAC CE, and DCI.

For example, when the CSI is periodically reported, the third information may be RRC signaling; when the CSI is semi-persistently reported, the third information may be a MAC CE or DCI; or when the CSI is aperiodically reported, the third information may be DCI.

S703 and S704 may be understood as that the network device sends the third information to the terminal device based on the first information.

S705: The terminal device sends a CSI report. Correspondingly, the network device receives the CSI report from the terminal device.

It may be understood that, for the network device, the CSI report is sent by the terminal device based on the third information.

Based on the method provided in FIG. 7, the network device may receive the first information, learn of, based on the capability of the terminal device, for example, the at least one piece of capability information indicated by the first information, the quantity of time domain units actually supported by the terminal device, and configure, for the terminal device based on the quantity of time domain units actually supported by the terminal device, the parameter for reporting the CSI report, for example, the quantity of time domain units corresponding to the CSI report, or the foregoing third information, so that the capability requirement of the terminal device for determining the CSI report falls within the quantity of time domain units supported by the terminal device, thereby improving effectiveness of CSI report reporting.

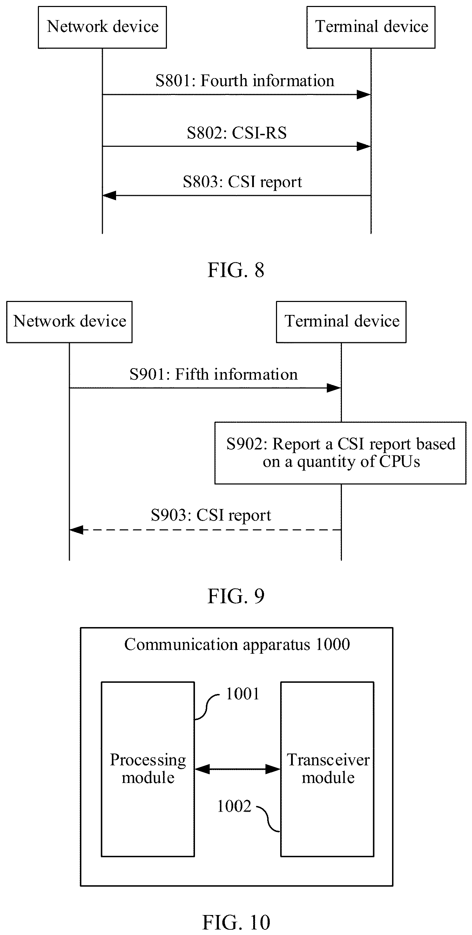

In some possible embodiments, a CSI report based on a Type II Doppler codebook is triggered by DCI. In this case, the terminal device needs sufficient time to estimate and calculate CSI, to obtain the CSI report. Therefore, sufficient time needs to be reserved between an end moment of the DCI and a start moment of the CSI report, and sufficient time needs to be reserved between an end moment of CSI-RS measurement and the start moment of the CSI report. Based on this, a possible embodiment of this application provides a channel measurement method. As shown in FIG. 8, the channel measurement method includes the following steps.

S801: A network device sends fourth information to a terminal device. Correspondingly, the terminal device receives the fourth information from the network device.

The fourth information is used to trigger the terminal device to report a CSI report, and indicates a start moment of obtaining the CSI report. A time length between an end moment of receiving the fourth information and a start moment of reporting the CSI report is a first time length. A time length between an end moment of receiving a CSI-RS resource used to calculate the CSI report and the start moment of reporting the CSI report is a second time length. At least one of the first time length and the second time length is related to a quantity of time domain units corresponding to the CSI report and/or a quantity of CSI-RS measurements. The second time length is less than the first time length.

In a possible design solution, the time length between the end moment of receiving the CSI-RS resource used to calculate the CSI report and the start moment of reporting the CSI report may be a smallest value of a time length between an end moment of the CSI-RS resource actually used to calculate the CSI report and a start moment of an uplink data channel used to carry the CSI report. For example, the second time length may represent a minimum quantity of symbols from a last symbol of the CSI-RS resource actually used to calculate the CSI report to a 1^{st} symbol of the uplink data channel used to carry the CSI report.

The second time length is related to the quantity of time domain units corresponding to the CSI report and/or the quantity of CSI-RS measurements. In other words, the second time length may be determined based on the quantity of time domain units corresponding to the CSI report and/or the quantity of CSI-RS measurements. Details are not described herein again.

For example, the quantity of CSI-RS measurements may be any one of a plurality of quantities of CSI-RS measurements preconfigured by the network device for the terminal device.

Optionally, in this embodiment of this application, the quantity of CSI-RS measurements may be a smallest one of the plurality of quantities of CSI-RS measurements preconfigured by the network device for the terminal device; or the quantity of CSI-RS measurements may be a smallest one of a plurality of quantities of CSI-RS measurements agreed on in a protocol. The first time length and the second time length satisfy a relationship shown in the following formula (1): $Z 2 = Z 2 ′ + K 1$

*Z*2 is the first time length, *Z*2' is the second time length, and *K1* is a constant, or *K1* is related to the quantity of CSI-RS measurements.

Optionally, that *K*1 is related to the quantity of CSI-RS measurements may include: *K1* is positively related to the quantity of CSI-RS measurements.

In this way, in different time domain unit configurations, CSI calculation complexity of the terminal device varies, and when different second time lengths are configured, sufficient calculation time may be reserved for the terminal device based on different calculation complexity.

Further, *K*1 satisfies a relationship shown in the following formula (2): $K 1 = a \left(Ks-1\right) + b$

a is a constant, or *a* is a parameter related to an interval between two adjacent CSI-RS measurements, *b* is a constant, *a* > 0, *b* ≥ 0, and *Ks* is the quantity of CSI-RS measurements. In this case, *K1* is related to the interval between the two adjacent CSI-RS measurements, and *Z*2 is positively correlated with *K*1. Therefore, it can be learned that Z2 is positively correlated with the interval between the two adjacent CSI-RS measurements.

It should be noted that when *K*1 is the constant, *K*1 corresponds to a subcarrier spacing, or *K*1 corresponds to *µ*. For example, different subcarrier spacings correspond to different *K*1, or different *µ* corresponds to different *K*1.

It may be understood that *Z*2' corresponds to the subcarrier spacing, or *Z*2' corresponds to *µ*. For example, different subcarrier spacings correspond to different *Z*2', or different *µ* corresponds to different *Z*2'.

In a possible design solution, that the second time length is related to the quantity of time domain units corresponding to the CSI report may include: The second time length is positively related to the quantity of time domain units.

For example, the second time length *Z*2' satisfies a relationship shown in the following formula (3): $Z 2 ′ = f 1 \left(N4\right)$

*f*1(*N*4) is a function related to N4. For different values X and Y of *N*4, if *X* and *Y* satisfy the following relationship X ≥ *Y, f*1(*X*) ≥ *f*1(*Y*). For example, the second time length may satisfy a relationship shown in the following formula (4): $Z 2 ′ = K 2 ∗ N 4 + m$

*K*2 is a constant unrelated to *m* and N4, and *K*2 > 0. *m* is a constant. For example, *m* may be 0.

In another possible design solution, values of the quantity of time domain units are grouped into N sets, and values of a quantity of all time domain units in an n^{th} set in the N sets are all greater than or equal to values of a quantity of time domain units in an (n-1)^{th} set. Different quantities of time domain units correspond to a same second time length. In other words, the second time length is a piecewise function related to N4.

For example, the second time length may satisfy a relationship shown in the following formula (5): $Z 2 ′ = K 2 ∗ f 2 \left(N4\right) + X$

*f*2(*N*4) is a N4-based piecewise function, and X is a constant.

Optionally, that *K*2 is related to the quantity of CSI-RS measurements may include: K2 is positively related to the quantity of CSI-RS measurements.

Further, *K*2 satisfies a relationship shown in the following formula (6): $K 2 = a 1 \left(Ks-1\right) + b 1$

Both *a*1 and *b*1 are constants, *a*1 > 0, *b1* ≥ 0, and *Ks* is the quantity of CSI-RS measurements.

In this way, values of a quantity of the plurality of time domain units may correspond to a same time length, so that scheduling complexity of the network device can be reduced.

In a possible design solution, when *f*(*L, N*4) is less than or equal to a first threshold, the second time length satisfies a relationship shown in the following formula (7): $Z 2 ′ = K 3 ∗ {α}_{μ}$

When *f*(*L, N*4) is greater than a first threshold, the second time length satisfies a relationship shown in the following formula (8): $Z 2 ′ = K 4 ∗ {α}_{μ}$

*L* is a quantity of spatial-domain bases, *N*4 is the quantity of time domain units, *f*(*L, N*4) is a function related to *L* and *N*4, and *α_{µ}* is a constant greater than 0. *K*3 and *K*4 are both constants. Alternatively, *K*3 is related to the quantity of CSI-RS measurements, and *K*4 is related to the quantity of CSI-RS measurements.

When *K*3 is related to the quantity of CSI-RS measurements, and *K*4 is related to the quantity of CSI-RS measurements, the second time length may match the quantity of CSI-RS measurements. In this way, sufficient time may be reserved for CSI calculation.

Optionally, *f*(*L, N*4) is *M* times a product of the quantity of spatial-domain bases and the quantity of time domain units. In other words, *f*(*L, N*4) satisfies a relationship shown in the following formula (9): $f \left(L,N4\right) = N 4 ∗ M ∗ L$

*M* is an integer greater than or equal to 1.

For example, *M* may be 1 or 2.

Optionally, *K*3 is positively related to the quantity of CSI-RS measurements, and *K*4 is positively related to the quantity of CSI-RS measurements.

For example, *K*3 may satisfy a relationship shown in the following formula (10): $K 3 = cKs + d$

*K*4 may satisfy a relationship shown in the following formula (11): $K 4 = eKs + f$

*c, d,* and *e* are all constants, *c* > 0, *d* ≥ 0, *d* > 0*, e* ≥ 0, and *K*4 > *K*3 > 0.

Optionally, the second time length is further related to the interval between the two adjacent CSI-RS measurements.

For example, the second time length is inversely proportional to the interval between the two adjacent CSI-RS measurements.

For example, *f*3(*m*1) satisfies a relationship shown in the following formula (12): $f 3 \left(m1\right) = \left({r}_{1}-{m}_{1}\right) {s}_{1} + {p}_{1}$

Alternatively, *f*3(*m*1) satisfies a relationship shown in the following formula (13): $f 3 \left(m1\right) = {\left({r}_{1}-{m}_{1}\right)}^{2} {s}_{1} + {p}_{1}$

*m*1 is the interval between the two adjacent CSI-RS measurements, values of *r*₁, *s*₁, and *p*₁ are constants, *r*₁ > 0,*p*₁ ≥ 0*, and s*₁ > 0. The two adjacent CSI-RS measurements mean that for one CSI report, there is no other CSI-RS measurement for the CSI report between the two CSI-RS measurements.

Further, *f*3(*m*1) satisfies a relationship shown in the following formula (14): $f 3 \left(m1\right) = \left\{\begin{matrix}\left({r}_{1}-m1\right) {s}_{1} + {p}_{1} , {r}_{1} > m 1 , \\ {s}_{2} , {r}_{1} \leq m 1\end{matrix}\right.$

Alternatively, *f*3(*m*1) satisfies a relationship shown in the following formula (15): $f 3 \left(m1\right) = \left\{\begin{matrix}{\left({r}_{1}-m1\right)}^{2} {s}_{1} + {p}_{1} , {r}_{1} > m 1 , \\ {s}_{2} , {n}_{1} \leq m 1\end{matrix}\right. , where {s}_{2} > 0$

Further, a value of *s*₁ is a positive integer, for example, 4 or 5, and a value of *s*₂ is a positive integer and is greater than or equal to *s*₁. A value of *r*₁ is a positive integer. Meanings of the two formulas mean that when an interval between sending moments is less than *r*₁, a value of *f*3(*m*1) is inversely proportional to *m*1; or when the interval *m*1 between sending moments is greater than or equal to a specific predefined positive integer *r*₁, and the terminal device can complete CSI calculation within the interval *m*1, the value of *f*3(*m*1) does not change with *m*1, but is a fixed value *s*₂*.*

It can be learned that it is determined that a value of *n*_{CSI*-ref*} is inversely proportional to the interval between the two adjacent CSI-RS measurements, that is, as *m* decreases, a time domain position of a target CSI resource is more advanced than a time domain position for CSI reporting, so that when an interval between moments at which the terminal device performs CS RS measurement decreases, reserved CSI measurement result calculation time increases. In this way, on a premise that calculation of a single CSI feedback amount cannot be completed due to a small time interval between two adjacent CSI-RSs, the calculation can be further completed within the reserved CSI measurement result calculation time, thereby effectively utilizing resources of the terminal device, and improving communication performance of the terminal device.

In another possible design solution, the second time length is a constant, and the second time length corresponds to a subcarrier spacing.

It should be noted that different subcarrier spacings correspond to different first time lengths, or different *µ* correspond to different first time lengths. Different subcarrier spacings correspond to different second time lengths, or different *µ* correspond to different second time lengths.

S802: The network device sends a CSI-RS to the terminal device. Correspondingly, the terminal device receives the CSI-RS from the network device.

The CSI-RS is located before a target reference resource, and the target reference resource is determined based on the start moment of reporting the CSI report and the second time length.

For example, a time domain position of the target reference resource may be determined in the following manner:

It is assumed that a time domain position corresponding to an uplink resource used for the CSI report is n', and a time domain position of a reference resource for the CSI report is *n-n_{ref},* where *n* satisfies a relationship shown in the following formula (16): $n = \left⌊n′⋅\frac{{2}^{{μ}_{DL}}}{{2}^{{μ}_{UL}}}\right⌋$

*µ_{DL}* and *µ_{UL}* are separately determined by a numerology (Numerology) configured on a network side, and represent uplink-downlink subcarrier spacing configuration parameters. For example, if a downlink subcarrier spacing is 15 kHz, *µ_{DL}*=0; if a downlink subcarrier spacing is 30 kHz, *µ_{DL}*=1; if a downlink subcarrier spacing is 60 kHz, *µ_{DL}*=2; or if a downlink subcarrier spacing is 120 kHz, *µ_{DL}*=3.

For an aperiodic CSI report, when the aperiodic CSI report triggered to be reported by the terminal device and DCI for triggering the aperiodic CSI report are in a same slot, *n_{ref}* causes a reference resource and the DCI to be in the same slot (slot); or in another case, for example, when the aperiodic CSI report triggered to be reported and DCI for triggering the aperiodic CSI report are not in a same slot, *n_{ref}* is a minimum integer greater than or equal to $\left⌊Z2′/{N}_{symb}^{slot}\right⌋$*.* In this way, after CSI-RS measurement is completed, sufficient time may be reserved for CSI calculation, to improve effectiveness of the reported CSI report. ${N}_{symb}^{slot}$ is a quantity of symbols in one slot.

S803: The terminal device sends the CSI report to the network device.

For an implementation principle of S803, refer to a conventional technology. Details are not described herein.

Based on the method provided in FIG. 8, the terminal device may receive the fourth information from the network device, and send, to the network device, the CSI report obtained based on the fourth information. The fourth information is used to trigger the terminal device to report the channel state information CSI report, and indicates the start moment of the CSI report. The first time length between the end moment of the fourth information and the start moment of the CSI report is related to the quantity of time domain units corresponding to the CSI report and/or the quantity of CSI-RS measurements; and/or the second time length between the target reference resource and the start moment of the CSI report is related to the quantity of time domain units corresponding to the CSI report and/or the quantity of CSI-RS measurements. In this way, the CSI report is sent based on the fourth information indicated by the network device, where the first time length and/or the second time length of the terminal device are/is indicated by the network device based on the quantity of time domain units corresponding to the CSI report, so that the terminal device has sufficient time to calculate the CSI report, and a CSI calculation delay matches a capability of the terminal device, thereby improving effectiveness of CSI report reporting.

In some possible embodiments, when the network device triggers the terminal device to perform PMI estimation based on the Type II Doppler codebook to report the CSI report, the terminal device may report the CSI report with reference to an idle CSI processing unit (CSI processing unit, CPU) of the terminal device and at least the quantity of time domain units for the PMI.

The following provides detailed descriptions with reference to a channel measurement method shown in FIG. 9.

As shown in FIG. 9, the channel measurement method includes the following steps.

S901: A network device sends fifth information to a terminal device. Correspondingly, the terminal device receives the fifth information from the network device.

The fifth information is used to trigger the terminal device to report a target CSI report, and indicates a quantity of CPUs occupied by the target CSI report. The quantity of CPUs is related to a quantity of CSI-RS measurements and/or a quantity of time domain units for a PMI in the target CSI report.

In a possible design solution, the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

For example, that the quantity of CSI-RS measurements is determined based on a quantity of CSI-RS resources in a CSI-RS resource set corresponding to the target CSI report may include: The quantity of CSI-RS measurements is equal to the quantity of CSI-RS resources in the CSI-RS resource set corresponding to the target CSI report. That the quantity of CSI-RS measurements is determined based on a quantity of measurements for one CSI-RS resource in the CSI-RS resource set corresponding to the target CSI report includes: The quantity of CSI-RS measurements is equal to the quantity of measurements for one CSI-RS resource in the CSI-RS resource set corresponding to the target CSI report.

That the quantity of CPUs occupied by the target CSI report is related to the quantity of CSI-RS measurements and/or the quantity of time domain units supported by the terminal device for the PMI may be: The quantity of CPUs occupied by the target CSI report is related to the quantity of CSI-RS measurements; the quantity of CPUs occupied by the target CSI report may be related to the quantity of time domain units supported by the terminal device for the PMI, for example, is equal to the quantity of time domain units supported by the terminal device for the PMI; or the quantity of CPUs occupied by the target CSI report may be related to the quantity of CSI-RS measurements and the quantity of time domain units supported by the terminal device for the PMI, where for example, the quantity of CPUs occupied by the target CSI report is *Ks* * *N*4 + *X*0*. Ks* is the quantity of CSI-RS measurements, and N4 is related to the quantity of time domain units supported by the terminal device for the PMI.

X0 is a constant.

Alternatively, X0 may be capability information related to CPU occupation of the terminal device. For example, X0 may be a time length reserved for completing CSI calculation.

In a possible design solution, the quantity N of occupied CPUs satisfies a relationship shown in the following formula (17): $N = f 4 \left(Ks\right) + f 5 \left(N4\right)$

*f*5(*N*4) is a function related to *N*4, a value of *f4*(*Ks*) is related to a value of *Ks* or a value of *Ks* in a value set of *Ks,* and that a larger value of *Ks* or a larger value of *Ks* in the value set of Ks indicates larger *f4*(*Ks*) is satisfied. In other words, *f4*(*Ks*) is a function positively correlated with *Ks.* A value of *f*5(*N*4) is related to a value of *N*4 or a value of *N*4 in a value set of *N*4, and that a larger value of *N4* or a larger value of *N*4 in the value set of *N*4 indicates larger *f*5(*N*4) is satisfied.

For example, *f4*(*Ks*) may be related to a capability of the terminal device, for example, a computing capability. For example, *f*4(*Ks*) satisfies a relationship shown in the following formula (18): $f 4 \left(Ks\right) = a 3 ∗ Ks + b 3$

*a*3 corresponds to a quantity of CPUs occupied by each CSI-RS measurement, and *b*3 corresponds to a quantity of CPUs occupied by a plurality of CSI-RS measurements. A stronger computing capability of the terminal device indicates smaller *a*3. A stronger computing capability of the terminal device indicates smaller *b*3. A poorer computing capability of the terminal device indicates larger *a*3. A poorer computing capability of the terminal device indicates larger *b*3.

For example, *f*5(*N*4) may be related to a capability of the terminal device, for example, a computing capability. For example, *f*5(*N*4) satisfies a relationship shown in the following formula (19): $f 5 \left(N4\right) = a 4 ∗ N 4 + b 4$

*α*4 corresponds to a CPU occupied by PMI calculation in one time domain unit, and *b*4 corresponds to CPUs occupied by PMI calculation in a plurality of time domain units. A stronger computing capability of the terminal device indicates smaller *α*4. A stronger computing capability of the terminal device indicates smaller *b*4. A poorer computing capability of the terminal device indicates larger *α*4. A poorer computing capability of the terminal device indicates larger *b*4.

In a possible design solution, the quantity N of occupied CPUs satisfies a relationship in the following formula (20): $N = X 1 + f 6 \left(N4\right)$

X1 is a constant. Optionally, a value of X1 may be related to largest *Ks*. Largest Ks is a largest value in Ks configured by the network device for the terminal device.

For example, *f*6(*N*4) may be determined based on the capability information reported by the terminal device. For example, *f*6(*N*4) satisfies a relationship shown in the following formula (21): $f 6 \left(N4\right) = a 5 ∗ N 4 + b 5$

*a*5 corresponds to a CPU occupied by PMI calculation in one time domain unit, and *b*5 corresponds to CPUs occupied by PMI calculation in a plurality of time domain units. For an implementation principle of *a*5, refer to the related descriptions of *a*4. For an implementation principle of *b*5, refer to the related descriptions of *b*4. Details are not described herein again. X1 and b5 may be reported by the terminal device. Optionally, the terminal device may separately report X1 and b5, that is, reported information includes X1 and also includes b5. Alternatively, the terminal device may jointly report X1 and b5. The joint reporting means that the reported information includes a value corresponding to a combination of X1 and b5, for example, a sum of X1 and b5.

For an implementation principle of *f*6*(N4),* refer to the implementation principle of *f*5(*N*4)*.* Details are not described herein again.

In a possible design solution, the quantity N of occupied CPUs satisfies a relationship in the following formula (22): $N = f 7 \left(Ks\right) + X 2$

Details are not described herein again. *X*2 is a constant. Optionally, a value of *X*2 may be related to largest *N*4. Largest *N*4 is a largest value in *N*4 configured by the network device for the terminal device.

For example, *f7*(*Ks*) may be related to a capability of the terminal device, for example, a computing capability. For example, *f7*(*Ks*) satisfies a relationship shown in the following formula (23): $f 7 \left(Ks\right) = a 6 ∗ Ks + b 6$

*a*6 corresponds to a quantity of CPUs occupied by each CSI-RS measurement, and *b6* corresponds to a quantity of CPUs occupied by a plurality of CSI-RS measurements. For an implementation principle of *a*6, refer to the related descriptions of *a*3. For an implementation principle of *b6*, refer to the related descriptions of *b*3. Details are not described herein again. X2 and b6 may be reported by the terminal device. Optionally, the terminal device may separately report X2 and b6, that is, reported information includes X2 and also includes b6. Alternatively, the terminal device may jointly report X2 and b6. The joint reporting means that the reported information includes a value corresponding to a combination of X2 and b6, for example, a sum of X2 and b6.

Optionally, when a periodic CSI-RS is configured in a Doppler codebook, occupation time of the foregoing quantity of CPUs is time between an end moment of triggering reporting of a CSI report or triggering a PDCCH that carries the periodic CSI-RS and an end moment of a PUSCH that carries the CSI report corresponding to the periodic CSI-RS. When a semi-persistent CSI-RS is configured in the Doppler codebook, occupation time of the foregoing quantity of CPUs is time between an end moment of triggering reporting of a CSI report or triggering a PDCCH carrying the semi-persistent CSI-RS and an end moment of a PUSCH that carries the CSI report corresponding to the semi-persistent CSI-RS.

The fifth information may be RRC signaling (for example, when the CSI report is reported in a periodic manner), DCI (when the CSI report is reported in an aperiodic manner or when the CSI report is reported in a semi-periodic manner), or a MAC CE (when the CSI report is reported in the semi-periodic manner).

S902: The terminal device reports a CSI report based on the quantity of occupied CPUs.

For example, the terminal device may report the CSI report with reference to a quantity of idle CPUs and the quantity of CPUs occupied by the target CSI report. In other words, the CSI report is determined by the terminal device based on the quantity of idle CPUs of the terminal device and the quantity of CPUs occupied by the target CSI report.

In a possible design solution, S902 may include: When a quantity of idle CPUs is greater than or equal to the quantity of CPUs occupied by the target CSI report, the terminal device sends the target CSI report to the network device. In this way, the CSI report can be updated in time.

In a possible design solution, S902 may include: When a quantity of idle CPUs is less than the quantity of CPUs occupied by the target CSI report, the terminal device does not send the CSI report. In this way, resource overheads and power consumption of the terminal device can be reduced.

Alternatively, when the quantity of idle CPUs is less than the quantity of CPUs occupied by the target CSI report, the terminal device sends, to the network device, a CSI report that has been reported before current time. In this way, additional rate matching can be avoided, and processing complexity of the terminal device and the network device is not increased.

The current time is time at which the terminal device reports the CSI report to the network device.

When the terminal device sends the CSI report to the network device, the method provided in FIG. 9 may further include S903.

S903: The network device receives the CSI report from the terminal device.

When the terminal device sends the target CSI report, a CSI report received by the network device from the terminal device is the target CSI report. When the terminal device sends the CSI report that has been reported before the current time, a CSI report received by the network device from the terminal device is the CSI report that has been reported before the current time.

Based on the method provided in FIG. 9, the terminal device may receive the fifth information from the network device, and report the CSI report based on the quantity, indicated by the fifth information, of CSI processing unit CPUs occupied by the target CSI report and the quantity of idle CPUs of the terminal device. In this way, the terminal device can report the CSI report based on a CPU status of the terminal device, so that idle CPUs of the terminal device can match different statuses of reporting the CSI report.

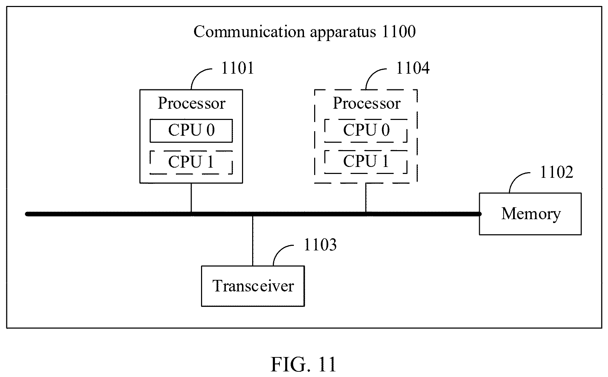

The communication methods provided in embodiments of this application are described above in detail with reference to FIG. 7 to FIG. 9. Communication apparatus configured to perform the communication methods provided in embodiments of this application are described below in detail with reference to FIG. 10 and FIG. 11.

For example, FIG. 10 is a diagram 1 of a structure of a communication apparatus according to an embodiment of this application. As shown in FIG. 10, the communication apparatus 1000 includes a processing module 1001 and a transceiver module 1002. For ease of description, FIG. 10 shows only main components of the communication apparatus.

In some embodiments, the communication apparatus 1000 may be used in the communication system shown in FIG. 4, and perform a function of the network device in the communication method shown in FIG. 4.

The processing module 1001 is configured to receive first information via the transceiver module 1002.

The first information includes at least one piece of capability information of the terminal device, and the capability information indicates a quantity of time domain units supported by the terminal device for a precoding matrix indicator PMI.

The processing module 1001 is further configured to send third information via the transceiver module 1002.

The third information indicates a quantity of time domain units corresponding to at least one to-be-reported channel state information CSI report, and the quantity of time domain units corresponding to one of the at least one CSI report is time domain units for one type of PMI in a quantity of time domain units for at least one type of PMI. The third information is obtained based on the first information.

In a possible design solution, the capability information may further indicate one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources.

Optionally, the capability information may include the quantity of time domain units supported by the terminal device for the PMI and one or more of the following: a quantity of ports supported by the terminal device in one CSI-RS resource, a quantity of the CSI-RS resources supported by the terminal device on all carriers, or a combination of a total quantity of ports supported by the terminal device in all CSI-RS resources on all the carriers.

Alternatively, optionally, the capability information may include the quantity of time domain units supported by the terminal device for the PMI and one or more of the following: a quantity of ports supported by the terminal device in one CSI-RS resource corresponding to a CSI report, a quantity of CSI-RS resources that correspond to the CSI report and that is supported by the terminal device, or a combination of a total quantity of ports supported by the terminal device in all CSI-RS resources corresponding to the CSI report.

Alternatively, optionally, the capability information may include a correspondence between the quantity of time domain units supported by the terminal device for the PMI and a first combination supported by the terminal device. The first combination may include one or more of the following: a quantity of ports supported by the terminal device in one CSI-RS resource, a quantity of CSI-RS resources supported by the terminal device on all carriers, or a total quantity of ports supported by the terminal device in all CSI-RS resources on all carriers.

Alternatively, optionally, the capability information may include a correspondence between the quantity of time domain units supported by the terminal device for the PMI and a second combination supported by the terminal device, where the second combination may include one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

Alternatively, optionally, the capability information of the terminal device may include a correspondence between second information and a third combination. The second information may indicate the quantity of time domain units supported by the terminal device for the PMI and frequency domain information. The frequency domain information indicates a quantity of subbands that carry a PMI in a subband that carries channel quality information CQI. The third combination may include one or more of the following: a quantity of ports supported by the terminal device in one CSI-RS resource, a quantity of the CSI-RS resources supported by the terminal device on all carriers, or a total quantity of ports supported by the terminal device in all CSI-RS resources on all the carriers.

Alternatively, optionally, the capability information may include a correspondence between second information and a fourth combination. The second information may indicate the quantity of time domain units supported by the terminal device for the PMI and frequency domain information. The frequency domain information indicates a quantity of subbands that carry a PMI in a subband that carries channel quality information CQI. The fourth combination may include one or more of the following: a quantity of ports supported by the terminal device in one CSI-RS resource corresponding to a CSI report, the quantity of CSI-RS resources that corresponding to one CSI report and that is supported by the terminal device, or the total quantity of ports supported by the terminal device in all CSI-RS resources corresponding to the CSI report.

Alternatively, optionally, the capability information may include the quantity of time domain units supported by the terminal device for the PMI, a total quantity of ports supported by the terminal device in all CSI-RS resources on all carriers, and one or a combination of the following: a quantity of ports supported by the terminal device in one CSI-RS resource corresponding to a CSI report, or a quantity of CSI-RS resources that correspond to the CSI report and that is supported by the terminal device.

Alternatively, optionally, the capability information may include the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

In a possible design solution, the processing module 1001 is further configured to receive a CSI report from the terminal device via the transceiver module 1002. The CSI report is obtained based on the third information.

Optionally, the communication apparatus 1000 may further include a storage module (not shown in FIG. 10). The storage module stores a program or instructions. When the processing module 1001 executes the program or the instructions, the communication apparatus 1000 may perform a function of the network device in the communication method shown in FIG. 7.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be the network device shown in FIG. 4, or may be a chip (system) or another part or component disposed in the network device, or an apparatus including the network device. This is not limited in embodiments of this application.

In addition, for technical effects of the communication apparatus 1000, refer to the technical effects of the communication method shown in any one of the items in FIG. 7. Details are not described herein again.

In some other embodiments, the communication apparatus 1000 may be used in the communication system shown in FIG. 7, and perform a function of the terminal device in the communication method shown in FIG. 3.

The processing module 1001 is configured to generate first information.

The first information includes at least one piece of capability information of the communication apparatus 1000, and the capability information indicates a quantity of time domain units supported by the communication apparatus 1000 for a precoding matrix indicator PMI.

The transceiver module 1002 is configured to send the first information to a network device.

In a possible design solution, the capability information may further indicate one or more of the following: information about a quantity of ports supported by the communication apparatus 1000 in one channel state information reference signal CSI-RS resource, information about a quantity of CSI-RS resources supported by the communication apparatus 1000, or information about a total quantity of ports supported by the communication apparatus 1000 in CSI-RS resources.

Optionally, the capability information may include the quantity of time domain units supported by the communication apparatus 1000 for the PMI and one or more of the following: a quantity of ports supported by the communication apparatus 1000 in one CSI-RS resource, a quantity of the CSI-RS resources supported by the communication apparatus 1000 on all carriers, or a combination of a total quantity of ports supported by the communication apparatus 1000 in all CSI-RS resources on all the carriers.

Alternatively, optionally, the capability information may include the quantity of time domain units supported by the communication apparatus 1000 for the PMI and one or more of the following: a quantity of ports supported by the communication apparatus 1000 in one CSI-RS resource corresponding to a CSI report, a quantity of CSI-RS resources that correspond to the CSI report and that is supported by the communication apparatus 1000, or a combination of a total quantity of ports supported by the communication apparatus 1000 in all CSI-RS resources corresponding to the CSI report.

Alternatively, optionally, the capability information may include a correspondence between the quantity of time domain units supported by the communication apparatus 1000 for the PMI and a first combination supported by the communication apparatus 1000. The first combination may include one or more of the following: a quantity of ports supported by the communication apparatus 1000 in one CSI-RS resource, a quantity of CSI-RS resources supported by the communication apparatus 1000 on all carriers, or a total quantity of ports supported by the communication apparatus 1000 in all CSI-RS resources on all the carriers.

Alternatively, optionally, the capability information may include a correspondence between the quantity of time domain units supported by the communication apparatus 1000 for the PMI and a second combination supported by the communication apparatus 1000. The second combination may include one or more of the following: a quantity of ports supported by the communication apparatus 1000 in one CSI-RS resource corresponding to a CSI report, a quantity of CSI-RS resources that correspond to the CSI report and that is supported by the communication apparatus 1000, or a total quantity of ports supported by the communication apparatus 1000 in all CSI-RS resources corresponding to the CSI report.

Alternatively, optionally, the capability information may include a correspondence between second information and a third combination. The second information may indicate the quantity of time domain units supported by the communication apparatus 1000 for the PMI and frequency domain information. The frequency domain information indicates a quantity of subbands that carry a PMI in a subband that carries channel quality information CQI. The third combination may include one or more of the following: a quantity of ports supported by the communication apparatus 1000 in one CSI-RS resource, a quantity of CSI-RS resources supported by the communication apparatus 1000 on all carriers, or a total quantity of ports supported by the communication apparatus 1000 in all CSI-RS resources on all the carriers.

Alternatively, optionally, the capability information may include a correspondence between second information and a fourth combination. The second information may indicate the quantity of time domain units supported by the communication apparatus 1000 for the PMI and frequency domain information. The frequency domain information indicates a quantity of subbands that carry a PMI in a subband that carries channel quality information CQI. The fourth combination may include one or more of the following: a quantity of ports supported by the communication apparatus 1000 in one CSI-RS resource corresponding to a CSI report, a quantity of CSI-RS resources that correspond to the CSI report and that is supported by the communication apparatus 1000, or a total quantity of ports supported by the communication apparatus 1000 in all CSI-RS resources corresponding to the CSI report.

Alternatively, optionally, the capability information may include the quantity of time domain units supported by the communication apparatus 1000 for the PMI and one or a combination of the following: a quantity of ports supported by the communication apparatus 1000 in one CSI-RS resource corresponding to a CSI report, a quantity of CSI-RS resources that correspond to the CSI report and that is supported by the communication apparatus 1000, or a total quantity of ports supported by the communication apparatus 1000 in all CSI-RS resources on all carriers.

Alternatively, optionally, the capability information may include the quantity of time domain units supported by the communication apparatus 1000 for the PMI, a quantity of ports supported by the communication apparatus 1000 in one CSI-RS resource corresponding to a CSI report, and one or a combination of the following: a quantity of CSI-RS resources supported by the communication apparatus 1000 on all carriers, or a total quantity of ports supported by the communication apparatus 1000 in CSI-RS resources corresponding to all CSI reports.

In a possible design solution, the transceiver module 1002 is further configured to receive third information from the network device. The third information indicates a quantity of time domain units corresponding to one of at least one to-be-reported CSI report, and the quantity of time domain units corresponding to one of the at least one CSI report is a quantity of time domain units for one type of PMI in a quantity of time domain units for at least one type of PMI. The transceiver module 1002 is further configured to send a CSI report based on the third information. The CSI report is obtained based on the third information.

Optionally, the communication apparatus 1000 may further include a storage module (not shown in FIG. 10). The storage module stores a program or instructions. When the processing module 1001 executes the program or the instructions, the communication apparatus 1000 may perform a function of the terminal device in the communication method shown in FIG. 7.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be the terminal device shown in FIG. 4, or may be a chip (system) or another part or component disposed in the terminal device, or an apparatus including the terminal device. This is not limited in embodiments of this application.

In addition, for technical effects of the communication apparatus 1000, refer to the technical effects of the communication method shown in any one of the items in FIG. 8. Details are not described herein again.

In some other embodiments, the communication apparatus 1000 may be used in the communication system shown in FIG. 8, and perform a function of the terminal device in the communication method shown in FIG. 3.

The processing module 1001 is configured to receive fourth information from a network device via the transceiver module 1002. The fourth information is used to trigger the communication apparatus 1000 to report a channel state information CSI report, and indicates a start moment of reporting the CSI report. A time length between an end moment of receiving the fourth information and a start moment of reporting the CSI report is a first time length. A time length between an end moment of receiving a channel state information reference signal CSI-RS resource used to calculate the CSI report and the start moment of reporting the CSI report is a second time length. At least one of the first time length and the second time length is related to a quantity of time domain units corresponding to the CSI report and/or a quantity of CSI-RS measurements. The second time length is less than the first time length. The processing module 1001 is further configured to receive a CSI-RS from the network device via the transceiver module 1002. The CSI-RS is located before a target reference resource, and the target reference resource is determined based on the start moment of reporting the CSI report and the second time length. The processing module 1001 is further configured to send the CSI report to the network device via the transceiver module 1002.

In a possible design solution, the second time length is positively correlated with the quantity of time domain units. In this way, in different time domain unit configurations, CSI calculation complexity of the communication apparatus 1000 is different, and when different second time lengths are configured, sufficient calculation time may be reserved for the communication apparatus 1000 based on the different calculation complexity.

In a possible design solution, values of the quantity of time domain units are grouped into N sets, and values of a quantity of all time domain units in an n^{th} set in the N sets are all greater than or equal to values of a quantity of time domain units in an (n-1)^{th} set. Different quantities of time domain units correspond to a same second time length. In this way, values of a quantity of the plurality of time domain units may correspond to a same time length, so that processing complexity of the communication apparatus 1000 can be reduced.

In a possible design solution, the first time length and the second time length satisfy the following relationship: *Z*2 = *Z2' + K*1. *Z*2 is the first time length, *Z*2' is the second time length, and *K*1 is a constant, or *K*1 is related to the quantity of CSI-RS measurements.

Optionally, when *K*1 is related to the quantity of CSI-RS measurements, *K*1 is positively related to the quantity of CSI-RS measurements. It is ensured within the first time length that an appropriate quantity of CSI measurements can be measured within time.

Further, *K*1 meets the following relationship: *K*1 = *a*(*Ks* - 1) *+ b. a* is a constant, or a is a parameter related to an interval between two adjacent CSI-RS measurements, b is a constant, *a* > 0, *b* ≥ 0, and *Ks* is the quantity of CSI-RS measurements.

In a possible design solution, when *f*(*L, N*4) is less than or equal to a first threshold, the second time length satisfies the following relationship: *Z*2' = *K3* * *α_{µ}*. When *f*(*L, N4*) is greater than a first threshold, the second time length satisfies the following relationship: *Z*2' = *K4* * *α_{µ}. L* is a quantity of spatial-domain bases, *N*4 is the quantity of time domain units, *f (L, N4)* is a function related to L and *N*4, and *α_{µ}* is a constant greater than 0. *K*3 and *K*4 are both constants. Alternatively, *K3* is related to the quantity of CSI-RS measurements, and *K4* is related to the quantity of CSI-RS measurements. When K3 is related to the quantity of CSI-RS measurements, and K4 is related to the quantity of CSI-RS measurements, the second time length may match the quantity of CSI-RS measurements. In this way, sufficient time may be reserved for CSI calculation.

Optionally, *f*(*L, N*4) is *M* times a product of the quantity of spatial-domain bases and the quantity of time domain units. *M* is an integer greater than or equal to 1.

Optionally, the second time length may be further related to the interval between the two adjacent CSI-RS measurements.

Further, the second time length is inversely proportional to the interval between the two adjacent CSI-RS measurements.

Optionally, the communication apparatus 1000 may further include a storage module (not shown in FIG. 10). The storage module stores a program or instructions. When the processing module 1001 executes the program or the instructions, the communication apparatus 1000 may perform a function of the terminal device in the communication method shown in FIG. 8.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be the terminal device shown in FIG. 4, or may be a chip (system) or another part or component disposed in the terminal device, or an apparatus including the terminal device. This is not limited in embodiments of this application.

In addition, for technical effects of the communication apparatus 1000, refer to the technical effects of the communication method shown in FIG. 8. Details are not described herein again.

In some other embodiments, the communication apparatus 1000 may be used in the communication system shown in FIG. 8, and perform a function of the network device in the communication method shown in FIG. 3.

The processing module 1001 is configured to send fourth information to a terminal device via the transceiver module 1002. The fourth information is used to trigger the terminal device to report a channel state information CSI report, and indicates a start moment of reporting the CSI report. A time length between an end moment of receiving the fourth information and a start moment of reporting the CSI report is a first time length. A time length between an end moment of receiving a CSI-RS resource used to calculate the CSI report and the start moment of reporting the CSI report is a second time length. At least one of the first time length and the second time length is related to a quantity of time domain units corresponding to the CSI report and/or a quantity of CSI-RS measurements. The second time length is less than the first time length. The processing module 1001 is further configured to send a channel state information reference signal CSI-RS to the terminal device via the transceiver module 1002. The CSI-RS is located before a target reference resource, and the target reference resource is determined based on the start moment of reporting the CSI report and the second time length. The processing module 1001 is further configured to receive a CSI report from the terminal device via the transceiver module 1002.

In a possible design solution, values of the quantity of time domain units are grouped into N sets, and values of a quantity of all time domain units in an n^{th} set in the N sets are all greater than or equal to values of a quantity of time domain units in an (n-1)^{th} set. Different quantities of time domain units correspond to a same second time length. Alternatively, the second time length is positively correlated with the quantity of time domain units.

In a possible design solution, the first time length and the second time length satisfy the following relationship: *Z*2 *= Z2' + K*1. *Z*2 is the first time length, *Z*2' is the second time length, and *K*1 is a constant, or *K*1 is related to the quantity of CSI-RS measurements.

Optionally, when *K*1 is related to the quantity of CSI-RS measurements, *K*1 is positively related to the quantity of CSI-RS measurements.

Further, *K*1 meets the following relationship: *K*1 = *a*(*Ks -* 1) + *b. a* is a constant, or a is a parameter related to an interval between two adjacent CSI-RS measurements, *b* is a constant, *a* > 0, *b* ≥ 0, and *Ks* is the quantity of CSI-RS measurements.

In a possible design solution, when *f*(*L, N*4) is less than or equal to a first threshold, the second time length satisfies the following relationship: *Z*2' = *K3* * *α_{µ}*. When *f*(*L, N*4) is greater than a first threshold, the second time length satisfies the following relationship: *Z*2' = *K*4 * *α_{µ}. L* is a quantity of spatial-domain bases, *N*4 is the quantity of time domain units, *f*(*L, N*4) is a function related to *L* and *N*4, and *α_{µ}* is a constant greater than 0. *K*3 and *K*4 are both constants. Alternatively, *K*3 is related to the quantity of CSI-RS measurements, and *K*4 is related to the quantity of CSI-RS measurements.

Optionally, *f*(*L, N*4) is *M* times a product of the quantity of spatial-domain bases and the quantity of time domain units. *M* is an integer greater than or equal to 1.

Optionally, *K*3 is positively related to the quantity of CSI-RS measurements, and *K4* is positively related to the quantity of CSI-RS measurements.

Optionally, the second time length may be further related to the interval between the two adjacent CSI-RS measurements.

Further, the second time length is inversely proportional to the interval between the two adjacent CSI-RS measurements.

Optionally, the communication apparatus 1000 may further include a storage module (not shown in FIG. 10). The storage module stores a program or instructions. When the processing module 1001 executes the program or the instructions, the communication apparatus 1000 may perform a function of the network device in the communication method shown in FIG. 8.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be the network device shown in FIG. 4, or may be a chip (system) or another part or component disposed in the network device, or an apparatus including the network device. This is not limited in embodiments of this application.

In addition, for technical effects of the communication apparatus 1000, refer to the technical effects of the communication method shown in FIG. 8. Details are not described herein again.

In some other embodiments, the communication apparatus 1000 may be used in the communication system shown in FIG. 9, and perform a function of the terminal device in the communication method shown in FIG. 3.

The processing module 1001 is configured to receive fifth information from a network device via the transceiver module 1002.

The fifth information is used to trigger the communication apparatus 1000 to report a target channel state information CSI report, and indicates a quantity of CSI processing unit CPUs occupied for obtaining the target CSI report. The quantity of CPUs is related to a quantity of channel state information reference signal CSI-RS measurements and/or a quantity of time domain units for a precoding matrix indicator PMI in the target CSI report.

The processing module 1001 is further configured to report a CSI report based on the quantity of CPUs via the transceiver module 1002.

In a possible design solution, the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

In a possible design solution, that the communication apparatus 1000 reports the CSI report based on the quantity of CPUs includes: When a quantity of idle CPUs is greater than or equal to the quantity of CPUs occupied by the target CSI report, the communication apparatus 1000 sends the target CSI report to the network device. In this way, the CSI report can be updated in time. When a quantity of idle CPUs is less than the quantity of CPUs occupied by the target CSI report, the communication apparatus 1000 does not send the CSI report. Alternatively, the communication apparatus 1000 sends, to the network device, a CSI report that has been reported before current time.

Optionally, the communication apparatus 1000 may further include a storage module (not shown in FIG. 10). The storage module stores a program or instructions. When the processing module 1001 executes the program or the instructions, the communication apparatus 1000 may perform a function of the terminal device in the communication method shown in FIG. 9.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be the terminal device shown in FIG. 4, or may be a chip (system) or another part or component disposed in the terminal device, or an apparatus including the terminal device. This is not limited in embodiments of this application.

In addition, for technical effects of the communication apparatus 1000, refer to the technical effects of the communication method shown in FIG. 9. Details are not described herein again.

In some other embodiments, the communication apparatus 1000 may be used in the communication system shown in FIG. 9, and perform a function of the network device in the communication method shown in FIG. 3.

The processing module 1001 is configured to send fifth information to a terminal device via the transceiver module 1002. The fifth information is used to trigger the terminal device to report a target channel state information CSI report, and indicates a quantity of CSI processing unit CPUs occupied for obtaining the target CSI report. The quantity of CPUs is related to a quantity of CSI-RS measurements and/or a quantity of time domain units for a precoding matrix indicator PMI in the target CSI report. The processing module 1001 is further configured to receive a CSI report from the terminal device via the transceiver module 1002. The CSI report is determined by the terminal device based on the quantity of CPUs.

In a possible design solution, the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

Optionally, the communication apparatus 1000 may further include a storage module (not shown in FIG. 10). The storage module stores a program or instructions. When the processing module 1001 executes the program or the instructions, the communication apparatus 1000 may perform a function of the network device in the communication method shown in FIG. 9.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be the network device shown in FIG. 4, or may be a chip (system) or another part or component disposed in the network device, or an apparatus including the network device. This is not limited in embodiments of this application.

In addition, for technical effects of the communication apparatus 1000, refer to the technical effects of the communication method shown in FIG. 9. Details are not described herein again.

For example, FIG. 11 is a diagram 2 of a structure of a communication apparatus according to an embodiment of this application. The communication apparatus may be a terminal device or a network device, or may be a chip (system) or another component or assembly that may be disposed in the terminal device or the network device. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected via a communication bus.

Each component of the communication apparatus 1100 is described below in detail with reference to FIG. 11.

The processor 1101 is a control center of the communication apparatus 1100, and may be one processor, or may be a collective term of a plurality of processing elements. For example, the processor 1101 is one or more central processing units (central processing units, CPUs), or may be an application-specific integrated circuit (application-specific integrated circuit, ASIC), or is configured as one or more integrated circuits implementing embodiments of this application, for example, one or more digital signal processors (digital signal processors, DSPs) or one or more field programmable gate arrays (field programmable gate arrays, FPGAs).

Optionally, the processor 1101 may run or execute a software program stored in the memory 1102, and invoke data stored in the memory 1102, to perform various functions of the communication apparatus 1100.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 and a processor 1104 shown in FIG. 11. Each of these processors may be a single-core processor (single-CPU) or may be a multi-core processor (multi-CPU). The processor herein may be one or more devices, circuits, and/or processing cores configured to process data (for example, computer program instructions).

The memory 1102 is configured to store a software program for executing the solutions in this application, and the processor 1101 controls execution. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer, but is not limited thereto. The memory 1102 may be integrated with the processor 1101, or may exist independently, and is coupled to the processor 1101 through an interface circuit (not shown in FIG. 11) of the communication apparatus 1100. This is not specifically limited in embodiments of this application.

The transceiver 1103 is configured to communicate with another communication apparatus. For example, the communication apparatus 1100 is the terminal device, and the transceiver 1103 may be configured to communicate with a network device or communicate with another terminal device. For another example, the communication apparatus 1100 is the network device, and the transceiver 1103 may be configured to communicate with a terminal device or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 via an interface circuit (not shown in FIG. 11) of the communication apparatus 1100. This is not specifically limited in embodiments of this application.

It should be noted that, the structure of the communication apparatus 1100 shown in FIG. 11 does not constitute a limitation on the communication apparatus. An actual communication apparatus may include more or fewer components than those shown in the figure, combine some components, or have different component arrangement.

In addition, for technical effects of the communication apparatus 1100, refer to the technical effects of the communication method in the foregoing method embodiments. Details are not described herein again.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be further understood that the memory in this embodiment of this application may be a volatile memory or a nonvolatile memory, or may include the volatile memory and the nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and is used as an external cache. By way of example, and not limitation, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

All or some of the foregoing embodiments may be implemented by using software, hardware (for example, circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" refers to one or more, and "a plurality of" refers to two or more. "At least one of the following items (pieces)" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not constitute any limitation on the implementation processes in embodiments of this application.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solution of this application essentially, or the part contributing to the conventional technology, or some of the technical solution may be implemented in a form of a software product. The computer software product is stored in a storage medium, and includes several instructions for indicating a computer device (which may be a personal computer, a server, a network device, or the like) to perform all or some of the steps in the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A capability reporting method, wherein the method comprises:
generating, by a terminal device, first information, wherein the first information comprises at least one piece of capability information of the terminal device, and the capability information indicates a quantity of time domain units supported by the terminal device for a precoding matrix indicator PMI; and
sending, by the terminal device, the first information to a network device.

2. The method according to claim 1, wherein the capability information further indicates one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources.

3. The method according to claim 2, wherein the capability information comprises the quantity of time domain units supported by the terminal device for the PMI and one or a combination of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

4. The method according to claim 2, wherein the capability information comprises the quantity of time domain units supported by the terminal device for the PMI and one or a combination of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

5. The method according to claim 2, wherein the capability information comprises a correspondence between the quantity of time domain units supported by the terminal device for the PMI and a first combination supported by the terminal device; and the first combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

6. The method according to claim 2, wherein the capability information comprises a correspondence between the quantity of time domain units supported by the terminal device for the PMI and a second combination supported by the terminal device, wherein the second combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

7. The method according to claim 2, wherein the capability information comprises a correspondence between second information and a third combination, wherein the second information indicates the quantity of time domain units supported by the terminal device for the PMI and frequency domain information, and the frequency domain information indicates a quantity of subbands that carry a PMI in a subband that carries channel quality information CQI; and
the third combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

8. The method according to claim 2, wherein the capability information comprises a correspondence between second information and a fourth combination, wherein the second information indicates the quantity of time domain units supported by the terminal device for the PMI and frequency domain information, and the frequency domain information indicates a quantity of subbands that carry a precoding matrix indicator PMI in a subband that carries channel quality information CQI; and
the fourth combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

9. The method according to claim 2, wherein the capability information comprises the quantity of time domain units supported by the terminal device for the PMI, a total quantity of ports supported by the terminal device in all CSI-RS resources on all carriers, and one or a combination of the following: a quantity of ports supported by the terminal device in one CSI-RS resource corresponding to a CSI report, or a quantity of CSI-RS resources that correspond to the CSI report and that is supported by the terminal device.

10. The method according to claim 2, wherein the capability information comprises the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

11. The method according to any one of claims 1 to 10, wherein the method further comprises:
receiving, by the terminal device, third information from the network device, wherein the third information indicates a quantity of time domain units corresponding to one of at least one to-be-reported CSI report, and the quantity of time domain units corresponding to one of the at least one CSI report is a quantity of time domain units for one type of PMI in a quantity of time domain units for at least one type of PMI; and
sending, by the terminal device, a CSI report, wherein the CSI report is obtained based on the third information.

12. A capability reporting method, wherein the method comprises:
receiving, by a network device, first information, wherein the first information comprises at least one piece of capability information of a terminal device, and the capability information indicates a quantity of time domain units supported by the terminal device for a precoding matrix indicator PMI; and
sending, by network device, third information, wherein the third information indicates a quantity of time domain units corresponding to at least one to-be-reported channel state information CSI report, a quantity of time domain units corresponding to one of the at least one CSI report is a quantity of time domain units for one type of PMI in a quantity of time domain units for at least one type of PMI, and the third information is obtained based on the first information.

13. The method according to claim 12, wherein the capability information further indicates one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources.

14. The method according to claim 13, wherein the capability information comprises the quantity of time domain units supported by the terminal device for the PMI and one or a combination of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

15. The method according to claim 12, wherein the capability information comprises the quantity of time domain units supported by the terminal device for the PMI and one or a combination of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

16. The method according to claim 13, wherein the capability information comprises a correspondence between the quantity of time domain units supported by the terminal device for the PMI and a first combination supported by the terminal device; and the first combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

17. The method according to claim 13, wherein the capability information comprises a correspondence between the quantity of time domain units supported by the terminal device for the PMI and a second combination supported by the terminal device, wherein the second combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

18. The method according to claim 13, wherein the capability information comprises a correspondence between second information and a third combination, wherein the second information indicates the quantity of time domain units supported by the terminal device for the PMI and frequency domain information, and the frequency domain information indicates a quantity of subbands that carry a PMI in a subband that carries channel quality information CQI; and
the third combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

19. The method according to claim 13, wherein the capability information comprises a correspondence between second information and a fourth combination, wherein the second information indicates the quantity of time domain units supported by the terminal device for the PMI and frequency domain information, and the frequency domain information indicates a quantity of subbands that carry a precoding matrix indicator PMI in a subband that carries channel quality information CQI; and
the fourth combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

20. The method according to claim 13, wherein the capability information comprises the quantity of time domain units supported by the terminal device for the PMI, a total quantity of ports supported by the terminal device in all CSI-RS resources on all carriers, and one or a combination of the following: a quantity of ports supported by the terminal device in one CSI-RS resource corresponding to the CSI report, or a quantity of CSI-RS resources that correspond to the CSI report and that is supported by the terminal device.

21. The method according to claim 13, wherein the capability information comprises the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

22. The method according to any one of claims 12 to 21, wherein the method further comprises:
receiving, by the network device, a CSI report from the terminal device, wherein the CSI report is obtained based on the third information.

23. A communication apparatus, wherein the apparatus comprises a processing module and a transceiver module, wherein
the processing module is configured to generate first information, wherein the first information comprises at least one piece of capability information of a terminal device, and the capability information indicates a quantity of time domain units supported by the terminal device for a precoding matrix indicator PMI; and
the transceiver module is configured to send the first information to a network device.

24. The apparatus according to claim 23, wherein the capability information further indicates one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources.

25. The apparatus according to claim 24, wherein the capability information comprises the quantity of time domain units supported by the terminal device for the PMI and one or a combination of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

26. The apparatus according to claim 24, wherein the capability information comprises the quantity of time domain units supported by the terminal device for the PMI and one or a combination of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

27. The apparatus according to claim 24, wherein the capability information comprises a correspondence between the quantity of time domain units supported by the terminal device for the PMI and a first combination supported by the terminal device; and the first combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

28. The apparatus according to claim 24, wherein the capability information comprises a correspondence between the quantity of time domain units supported by the terminal device for the PMI and a second combination supported by the terminal device, wherein the second combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

29. The apparatus according to claim 24, wherein the capability information comprises a correspondence between second information and a third combination, wherein the second information indicates the quantity of time domain units supported by the terminal device for the PMI and frequency domain information, and the frequency domain information indicates a quantity of subbands that carry a PMI in a subband that carries channel quality information CQI; and
the third combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

30. The apparatus according to claim 24, wherein the capability information comprises a correspondence between second information and a fourth combination, wherein the second information indicates the quantity of time domain units supported by the terminal device for the PMI and frequency domain information, and the frequency domain information indicates a quantity of subbands that carry a precoding matrix indicator PMI in a subband that carries channel quality information CQI; and
the fourth combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

31. The apparatus according to claim 24, wherein the capability information comprises the quantity of time domain units supported by the terminal device for the PMI, a total quantity of ports supported by the terminal device in all CSI-RS resources on all carriers, and one or a combination of the following: a quantity of ports supported by the terminal device in one CSI-RS resource corresponding to a CSI report, or a quantity of CSI-RS resources that correspond to the CSI report and that is supported by the terminal device.

32. The apparatus according to claim 24, wherein the capability information comprises the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

33. The apparatus according to any one of claims 23 to 32, wherein the transceiver module is further configured to receive third information from the network device, wherein the third information indicates a quantity of time domain units corresponding to one of at least one to-be-reported CSI report, and the quantity of time domain units corresponding to one of the at least one CSI report is a quantity of time domain units for one type of PMI in a quantity of time domain units for at least one type of PMI; and
the terminal device sends a CSI report, wherein the CSI report is obtained based on the third information.

34. A communication apparatus, wherein the apparatus comprises a processing module and a transceiver module, wherein
the processing module is configured to receive first information via the transceiver module, wherein the first information comprises at least one piece of capability information of a terminal device, and the capability information indicates a quantity of time domain units supported by the terminal device for a precoding matrix indicator PMI; and
the processing module is further configured to send third information via the transceiver module, wherein the third information indicates a quantity of time domain units corresponding to at least one to-be-reported channel state information CSI report, a quantity of time domain units corresponding to one of the at least one CSI report is a quantity of time domain units for one type of PMI in a quantity of time domain units for at least one type of PMI, and the third information is obtained based on the first information.

35. The apparatus according to claim 34, wherein the capability information further indicates one or more of the following: information about a quantity of ports supported by the terminal device in one channel state information reference signal CSI-RS resource, information about a quantity of CSI-RS resources supported by the terminal device, or information about a total quantity of ports supported by the terminal device in CSI-RS resources.

36. The apparatus according to claim 35, wherein the capability information comprises the quantity of time domain units supported by the terminal device for the PMI and one or a combination of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

37. The apparatus according to claim 34, wherein the capability information comprises the quantity of time domain units supported by the terminal device for the PMI and one or a combination of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

38. The apparatus according to claim 35, wherein the capability information comprises a correspondence between the quantity of time domain units supported by the terminal device for the PMI and a first combination supported by the terminal device; and the first combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

39. The apparatus according to claim 35, wherein the capability information comprises a correspondence between the quantity of time domain units supported by the terminal device for the PMI and a second combination supported by the terminal device, wherein the second combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

40. The apparatus according to claim 35, wherein the capability information comprises a correspondence between second information and a third combination, wherein the second information indicates the quantity of time domain units supported by the terminal device for the PMI and frequency domain information, and the frequency domain information indicates a quantity of subbands that carry a PMI in a subband that carries channel quality information CQI; and
the third combination comprises one or more of the following: a quantity of ports supported by the terminal device in one CSI-RS resource, a quantity of CSI-RS resources supported by the terminal device on all carriers, or a total quantity of ports supported by the terminal device in all CSI-RS resources on all the carriers.

41. The apparatus according to claim 35, wherein the capability information comprises a correspondence between second information and a fourth combination, wherein the second information indicates the quantity of time domain units supported by the terminal device for the PMI and frequency domain information, and the frequency domain information indicates a quantity of subbands that carry a precoding matrix indicator PMI in a subband that carries channel quality information CQI; and
the fourth combination comprises one or more of the following: a quantity of ports supported by the terminal device in one CSI-RS resource corresponding to a CSI report, a quantity of CSI-RS resources that correspond to the CSI report and that is supported by the terminal device, or a total quantity of ports supported by the terminal device in all CSI-RS resources corresponding to the CSI report.

42. The apparatus according to claim 35, wherein the capability information comprises the quantity of time domain units supported by the terminal device for the PMI, a total quantity of ports supported by the terminal device in all CSI-RS resources on all carriers, and one or a combination of the following: a quantity of ports supported by the terminal device in one CSI-RS resource corresponding to the CSI report, or a quantity of CSI-RS resources that correspond to the CSI report and that is supported by the terminal device.

43. The apparatus according to claim 35, wherein the capability information comprises the quantity of time domain units supported by the terminal device for the PMI, a quantity of ports supported by the terminal device in one CSI-RS resource corresponding to a CSI report, and one or a combination of the following: a quantity of CSI-RS resources supported by the terminal device on all carriers, or a total quantity of ports supported by the terminal device in CSI-RS resources corresponding to all CSI reports.

44. The apparatus according to any one of claims 34 to 43, wherein the processing module is further configured to receive a CSI report from the terminal device via the transceiver module, wherein the CSI report is obtained based on the third information.

45. A channel measurement method, wherein the method comprises:
receiving, by a terminal device, fifth information from a network device, wherein the fifth information is used to trigger the terminal device to report a target channel state information CSI report, and indicate a quantity of CSI processing unit CPUs occupied by the target CSI report, and the quantity of CPUs is related to a quantity of channel state information reference signal CSI-RS measurements and/or a quantity of time domain units for a precoding matrix indicator PMI in the target CSI report; and
reporting, by the terminal device, a CSI report based on the quantity of CPUs.

46. The method according to claim 45, wherein the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

47. The method according to claim 45 or 46, wherein the quantity of CPUs and the quantity of CSI-RS measurements satisfy the following relationship: $N = a 5 ∗ N 4 + b 5 ,$ wherein
*N* is the quantity of CPUs, *a*5 corresponds to a CPU occupied by PMI calculation in one time domain unit, *N*4 is the quantity of CSI-RS measurements, and *b*5 corresponds to CPUs occupied by PMI calculation in a plurality of time domain units.

48. The method according to claim 45, wherein the quantity of CPUs and the quantity of time domain units supported by the terminal device for the PMI satisfy the following relationship: $N = a 6 ∗ Ks + b 6 ,$ wherein
*N* is the quantity of CPUs, *a*6 corresponds to a quantity of CPUs occupied by each CSI-RS measurement, *Ks* is the quantity of time domain units supported by the terminal device for the PMI, and *b*6 corresponds to a quantity of CPUs occupied by a plurality of CSI-RS measurements.

49. A channel measurement method, wherein the method comprises:
sending, by a network device, fifth information to a terminal device, wherein the fifth information is used to trigger the terminal device to report a target channel state information CSI report, and indicates a quantity of CSI processing unit CPUs occupied for obtaining the target CSI report, and the quantity of CPUs is related to a quantity of channel state information reference signal CSI-RS measurements and/or a quantity of time domain units for a precoding matrix indicator PMI in the target CSI report; and
receiving, by the network device, a CSI report from the terminal device, wherein the CSI report is determined by the terminal device based on the quantity of CPUs.

50. The method according to claim 49, wherein the quantity of CSI-RS measurements is determined based on a quantity of CSI-RS resources in a CSI-RS resource set corresponding to the target CSI report, or the quantity of CSI-RS measurements is determined based on a quantity of measurements for one CSI-RS resource in the CSI-RS resource set corresponding to the target CSI report.

51. The method according to claim 49 or 50, wherein the quantity of CPUs and the quantity of CSI-RS measurements satisfy the following relationship: $N = a 5 ∗ N 4 + b 5 ,$ wherein
*N* is the quantity of CPUs, *a*5 corresponds to a CPU occupied by PMI calculation in one time domain unit, *N*4 is the quantity of CSI-RS measurements, and b5 corresponds to CPUs occupied by PMI calculation in a plurality of time domain units.

52. The method according to claim 49, wherein the quantity of CPUs and the quantity of time domain units supported by the terminal device for the PMI satisfy the following relationship: $N = a 6 ∗ Ks + b 6 ,$ wherein
*N* is the quantity of CPUs, a6 corresponds to a quantity of CPUs occupied by each CSI-RS measurement, *Ks* is the quantity of time domain units supported by the terminal device for the PMI, and *b*6 corresponds to a quantity of CPUs occupied by a plurality of CSI-RS measurements.

53. A communication apparatus, wherein the communication apparatus is configured to perform the method according to any one of claims 45 to 52.

54. A communication apparatus, comprising a processor and a memory, wherein the memory is configured to store computer instructions, and when the processor executes the instructions, the communication apparatus is caused to perform the method according to any one of claims 1 to 11, or the method according to any one of claims 12 to 22, the method according to any one of claims 45 to 48, or the method according to any one of claims 49 to 52.

55. A communication apparatus, comprising a processor and an interface circuit, wherein
the interface circuit is configured to: receive code instructions and transmit the code instructions to the processor; and
the processor is configured to run the code instructions to perform the method according to any one of claims 1 to 11, the method according to any one of claims 12 to 22, the method according to any one of claims 45 to 48, or the method according to any one of claims 49 to 52.

56. A communication apparatus, wherein the communication apparatus comprises a processor and a transceiver, the transceiver is configured to exchange information between the communication apparatus and another communication apparatus, and the processor executes program instructions to perform the method according to any one of claims 1 to 11, the method according to any one of claims 12 to 22, the method according to any one of claims 45 to 48, or the method according to any one of claims 49 to 52.

57. The communication apparatus according to any one of claims 54 to 56, wherein the communication apparatus is a chip.

58. A computer-readable storage medium, wherein the computer-readable storage medium comprises a computer program or instructions, and when the computer program or the instructions are run on a computer, the computer is caused to perform the method according to any one of claims 1 to 11, the method according to any one of claims 12 to 22, the method according to any one of claims 45 to 48, or the method according to any one of claims 49 to 52.

59. A computer program product, wherein the computer program product comprises a computer program or instructions, wherein when the computer program or the instructions are run on a computer, the computer is caused to perform the method according to any one of claims 1 to 11, the method according to any one of claims 12 to 22, the method according to any one of claims 45 to 48, or the method according to any one of claims 49 to 52.
